# EUROPÄISCHE PATENTSCHRIFT

(11) **EP 3 552 820 B1**
(45) Veröffentlichungstag und Bekanntmachung des Hinweises auf die Patenterteilung: **13.10.2021**
(21) Anmeldenummer: 19175420.9
(22) Anmeldetag: 22.04.2014
(51) Int. Cl.: B32B 7/12, C09J 7/00

(54) **HANDEINREISSBARES GEWEBEKLEBEBAND MIT HOHER ABRIEBFESTIGKEIT UND GERÄUSCHDÄMPFUNG UND VERFAHREN ZU SEINER HERSTELLUNG**
HAND-TEARABLE FABRIC ADHESIVE TAPE WITH HIGH WEAR RESISTANCE AND NOISE REDUCTION AND METHOD FOR PRODUCING THE SAME
BANDE ADHÉSIVE EN TISSU POUVANT ÊTRE DÉCHIRÉE À LA MAIN À RÉSISTANCE AU FROTTEMENT ET À ATTÉNUATION DU BRUIT ÉLEVÉES ET SON PROCÉDÉ DE FABRICATION

(43) Veröffentlichungstag der Anmeldung: 16.10.2019
(62) Teilanmeldung aus: 14165347.7
(73) Patentinhaber: Coroplast Fritz Müller GmbH & Co. KG, 42279 Wuppertal (DE)
(72) Erfinder: LODDE, Christoph, 59439 Holzwickede (DE); WITTIG, Gülay, 44799 Bochum (DE)
(74) Vertreter: Dr. Solf & Zapf Patent- und Rechtsanwalts PartG mbB

(56) Entgegenhaltungen:
- EP-A1- 2 230 737
- DE-A1-102013 108 917
- DE-C1- 4 318 277
- GB-A- 2 191 969

## Beschreibung

Die Erfindung betrifft ein hoch abriebfestes technisches Klebeband, insbesondere ein auf sich selbst zu einer Klebebandrolle aufwickelbares Klebeband, vorzugsweise ein Kabelwickelband, mit einem doppellagigem bandförmigem Träger, der auf einer Seite mit einer druckempfindlichen Klebebeschichtung versehen ist, wobei der Träger eine erste, aus einem Gewebe bestehende textile Schichtlage und eine zweite textile Schichtlage umfasst, die vollflächig durch eine Klebverbindungsschicht fest miteinander verbunden sind.

Des Weiteren betrifft die Erfindung ein Verfahren zur Herstellung eines derartigen Klebebandes.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern, als auch von verschiedenartigen Vliesklebebändern.

Die unterschiedlichen, an Klebebänder gestellten Anforderungen verhalten sich teilweise hinsichtlich bestimmter Basisgrößen des Klebebandes, wie z. B. der Dicke, konträr zueinander. So ist - vorausgesetzt, andere Basisgrößen, wie das Trägermaterial, bleiben konstant - bei einem Klebeband mit zunehmender Dicke zwar mit einer höheren Abriebfestigkeit und Geräuschdämpfung, aber auch mit einer verringerten Flexibilität und einer Verschlechterung der Handeinreißbarkeit sowie des Flagging-Verhaltens zu rechnen.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind.

So wird die Abriebbeständigkeit nach LV 312 in Anlehnung an DIN ISO 6722 bestimmt, indem das Klebeband zunächst auf einen Dorn (Metallstab) mit 5 oder 10 mm Durchmesser aufgeklebt wird. Mit einem Schabwerkzeug, das einen Nadeldurchmesser von 0,45 mm aufweist, wird dann unter einer Gewichtskraft von 7 N die Anzahl der Hübe bestimmt, die benötigt wird, um das Klebeband durchzuscheuern. Hinsichtlich der Abriebbeständigkeit ist dabei in der LV 312 die in der nachstehenden Tabelle 1 wiedergegebene Klassifizierung vorgesehen.

**Tabelle 1: Einteilung der Abriebklassen nach LV 312**

| **Abriebklasse** | **Anforderung** |
|---|---|
| A - kein Abriebschutz | < 100 Hübe |
| B - geringer Abriebschutz | 100 - 499 Hübe |
| C - mittlerer Abriebschutz | 500 - 999 Hübe |
| D - hoher Abriebschutz | 1000 - 4999 Hübe |
| E - sehr hoher Abriebschutz | 5000 -14999 Hübe |
| F - extrem hoher Abriebschutz | 15000 - 29999 Hübe |
| G - Abriebschutz für Sonderanwendungen | ≥ 30000 Hübe |

Hinsichtlich der Geräuschdämpfung sieht die LV 312 die in der nachstehenden Tabelle 2 wiedergegebene Klassifizierung vor.

**Tabelle 2: Einteilung der Geräuschdämpfungsklassen nach LV 312**

| **Geräuschdämpfungsklasse** | **Anforderung** |
|---|---|
| A - keine Geräuschdämpfung | 0-2 dB(A) |
| B - geringe Geräuschdämpfung | > 2 - 5 dB(A) |
| C - mittlere Geräuschdämpfung | > 5 - 10 dB(A) |
| D - hohe Geräuschdämpfung | > 10 - 15 dB(A) |
| E - sehr hohe Geräuschdämpfung | > 15 dB(A) |

Als weitere anwendungstechnisch wichtige Prüfungen sind in der genannten Richtlinie beispielsweise auch Prüfmethoden für die thermische Beständigkeit, die Kompatibilität von Klebebändern mit elektrischen Fahrzeugleitungen sowie für die Chemikalienbeständigkeit, das Fogging- sowie für das Flagging-Verhalten beschrieben. Unter Flagging versteht man dabei eine Ablösung insbesondere schraubenförmig um einen Kabelsatz gewickelter Bänder, so dass deren Enden abstehen und, um dies zu vermeiden, jeweils beim Einsatz fixiert werden müssen.

Es sind, um den unterschiedlichen Beanspruchungen in der Praxis gerecht zu werden, gemäß dem Stand der Technik zahlreiche technische Lösungen für Klebebänder bekannt, bei denen in der Regel einer, teilweise auch zwei oder mehr, der geforderten Eigenschaften besondere Bedeutung beigemessen wird, während andere Eigenschaften als weniger bedeutsam in den Hintergrund treten, wobei ein eigentlich nicht als optimal angesehener Wertebereich für diese Parameter toleriert wird.

Aus der DE 20 2005 013 009 U1 ist ein Klebeband der eingangs genannten Art bekannt, das einen textilen Träger aus zumindest einer Gewebeschicht und einer damit verbundenen, insbesondere aus einem Velours oder Vlies gebildeten Flächengebildeschicht und eine ein- oder beidseitig auf den Träger aufgebrachte Klebebeschichtung aufweist, wobei die Gewebeschicht als Feingewebeschicht mit mehr als 25 Fäden/cm in Längs- und Querrichtung ausgebildet ist. Neben einer vorteilhaft hohen Abriebfestigkeit weist das bekannte Band aber als nachteilhafte Eigenschaften auf, dass es nicht maschinell verarbeitbar ist und am Kabelsatz ein Flagging zeigt, so dass seine Enden jeweils beim Einsatz fixiert werden müssen. Ebenso sind die o.g. Bänder nicht handeinreißbar.

Ein doppellagiges Klebeband der eingangs genannten Art ist auch aus der WO 2005/085379 A1 bekannt. In diesem Dokument wird insbesondere ein hoch abriebfestes und geräuschdämpfendes Klebeband für die Bandagierung von Kabelbäumen, insbesondere in Automobilen, beschrieben, das einen Träger mit einer ersten Deckschicht umfasst. Die erste Deckschicht besteht aus einem Velour, Gelege, Gewebe oder Gewirke, insbesondere aus einem PET-Filamentgewebe oder einem Polyamid-Gewebe. Die erste Deckschicht ist mit einer weiteren Schicht fest verbunden, die aus einem porösen Flächengebilde, wie einem Textil mit einer offenen, aber stabilen dreidimensionalen Struktur, oder wie aus einem Schaumstoff oder einer geschäumten Folie besteht. Diese Schicht kann insbesondere, im Sinne einer angestrebten hohen Geräuschdämpfung, ein hohes Flächengewicht von bis zu 500 g/m², insbesondere ein bevorzugtes Flächengewicht im Bereich von 150 bis 300 g/m², aufweisen. Die weitere Schicht kann anderseitig über ihre gesamte Fläche auf ihrer offenen Seite mit einer optional vorhandenen, dritten, als zweite Deckschicht bezeichneten Schicht fest verbunden sein, die vorzugsweise - wie die erste Deckschicht - aus einem Velour, Gelege, Gewebe oder Gewirke, insbesondere aus einem PET-Filamentgewebe oder einem Polyamid-Gewebe besteht. Der flächige Verbund aus der ersten Deckschicht, gegebenenfalls der zweiten Deckschicht, und der mit der ersten Deckschicht bzw. optional auch mit der zweiten Deckschicht verbundenen weiteren Schicht kann durch Verwendung eines Kaschierklebers oder klebefrei durch mechanische Verbundbildung wie Vermaschen, Übernähen, Vernadeln oder Wasserstrahlverfestigung erfolgen. An einer Ausführungsform des bekannten Bandes wurden Abriebfestigkeiten nach ISO 6722 bei einer Gewichtsbelastung von 10 N von über 8.000 Doppelhüben am 10-mm-Dorn gemessen. Auch an diesem bekannten Band ist nachteilig, dass es nicht maschinell verarbeitbar ist und eine hohe Banddicke aufweist. Derartige Klebebänder sind nachteiligerweise auch nicht handeinreißbar.

Der vorliegenden Erfindung liegt die Aufgabe zugrunde, ein Klebeband der eingangs genannten Art mit doppellagigem Träger zu schaffen, das bei hoher Abriebfestigkeit, insbesondere mit einer Abriebfestigkeit nach Klasse E gemäß LV 312, die vorzugsweise am 5-mm-Dorn bestimmt wird, sowohl manuell, als auch maschinell leicht verarbeitbar ist und eine Handeinreißbarkeit aufweist. Dabei soll das erfindungsgemäße Klebeband bevorzugt bei Vorhandensein eines verrottungsfesten Trägers auch schmiegsam und flexibel sein, ein im Vergleich mit Klebebändern gemäß dem vorstehend genannten Stand der Technik verbessertes Flagging-Verhalten zeigen, eine hohe Klebkraft aufweisen und mindestens die Anforderungen gemäß der Geräuschdämpfungsklasse B nach LV 312 erfüllen.

Erfindungsgemäß wird dies dadurch erreicht, dass die zweite textile Schichtlage aus einem Gewebe besteht, wobei das Gewebe der ersten textilen Schichtlage und das Gewebe der zweiten textilen Schichtlage jeweils ein Flächengewicht im Bereich von 50 g/ m² bis 300 g/m² aufweist, wobei die Klebverbindungsschicht ein Flächengewicht im Bereich von 50 g/m² bis 300 g/m² aufweist und wobei das Klebeband eine Dicke (D) im Bereich von 0,55 mm bis 1,0 mm aufweist und mindestens eine Bandkante in Form eines von einer geraden Linie abweichenden Musters ausgeführt ist, welches mittels eines Trennprozesses durch eine Trenneinrichtung, die Mikrozacken mit einer Zahnhöhe (ZH) im Bereich von 0,1 mm bis <1,0 mm und Makrozacken mit einer Zahnhöhe (ZH) im Bereich von 1,0 mm bis 3,0 mm aufweist, derart strukturiert ist, dass eine Reißfestigkeit bei einer Prüfung nach DIN EN 14410 kleiner ist als 125 N/cm, wobei eine Reißdehnung mindestens 20 Prozent beträgt und eine Weiterreißfestigkeit gemäß Elmendorftest kleiner ist als 10.000 mN.

Mit dem erfindungsgemäßen Klebeband werden so unter Verzicht auf eine mit der ersten textilen Schichtlage verbundene Flächengebildeschicht, die aus einer offenen dreidimensionalen Struktur, wie einem Vlies oder einem Schaumstoff, besteht, sowie unter Verzicht auf eine gerade Schnittkante bei gegebener Handeinreißbarkeit eine Geräuschdämpfung mindestens der Klasse B sowie exzellente Werte der Abriebfestigkeit erzielt. Insbesondere wird eine Abriebfestigkeit gemäß der Klasse E nach LV 312 erreicht.

Bei gleicher erreichter Hubzahl bis zum Abriebgrenzwert liegt dabei die Abriebfestigkeit am 5-mm-Dorn höher als an einem 10-mm-Dorn, da bei einer gegebenen Abriebfestigkeit an einem solchen Dorn der Abriebgrenzwert eher - also schon bei einer geringeren Hubzahl - erreicht wird als am 10-mm-Dorn. So ist es möglich, dass ein Gewebe, das am Dorn mit 10 mm Durchmesser eine Abriebfestigkeit nach einer bestimmten Klasse erreicht, entsprechend der Prüfung am 5-mm-Dorn in eine Klasse tiefer eingestuft werden muss. Dies ist jedoch bei einem erfindungsgemäßen Klebeband nicht der Fall: Die Abriebklasse E wird sowohl am 10-mm-Dorn, als auch am 5-mm-Dorn erreicht.

Das erfindungsgemäße Klebeband ist deutlich schmiegsamer als die eingangs beschriebenen bekannten Klebebänder. Es hat diesen gegenüber eine geringere Neigung zum Flagging. Eine manuelle und maschinelle Verarbeitung ist gegeben. Die entsprechenden Parameter liegen in einem Bereich, wie er auch für einlagige Klebebänder charakteristisch ist.

Die Vorteilhaftigkeit der Erfindung zeigt sich dabei im Besonderen, wenn der Träger aus einem verrottungsfesten textilen Träger, wie beispielsweise aus einem Polyamid- oder Polyester-Gewebe, besteht, wodurch insbesondere neben der angestrebten Abriebfestigkeit die geforderte Reißfestigkeit gewährleistet werden kann. Aufgrund dieser Eigenschaften eignet sich das erfindungsgemäße Klebeband ausgezeichnet zum Umwickeln von Kabelsätzen.

Das erfindungsgemäße Klebeband kann dabei insbesondere eine Dicke im Bereich von von 0,55 mm bis 0,75 mm, aufweisen.

Durch die Muster-Strukturierung einer oder insbesondere beider Bandkanten, welche bei der Bandherstellung mittels eines Trennprozesses ausgeführt werden kann, kann dabei - auch bei einem anfänglich zunächst nicht handeinreißbaren Träger - überraschenderweise bei dieser Dicke dennoch eine Handeinreißbarkeit in Querrichtung des Bandes erzielt werden.

Insbesondere kann dabei vorgesehen sein, dass beide Bandkanten als Zick-Zack-Schnittkanten ausgebildet sind, welche durch ein Zahnmuster mit Zahnspitzen, Zahnflanken und Zahnfüßen beschrieben werden kann. Dabei kann die Zahnhöhe des Musters im Bereich von 0,1 mm (0,1 mm bis <1,0 mm - Mikrozacken) bis 3,0 mm (1,0 mm bis 3,0 mm - Makrozacken) liegen, wobei durch den Trennprozess in der Nähe der Bandkante liegende äußere Kettfäden im Bereich der Zahnflanken zerschnitten oder im Bereich der Zahnfüße zumindest angerissen werden. Die Anzahl der solchermaßen geschwächten Kettfäden kann im Bereich von > 1 bis 15, bevorzugt im Bereich von 2 bis 12, besonders bevorzugt im Bereich 6 bis 11, liegen. Die Schussfäden werden durch den Trennprozess auf unterschiedliche Längen gekürzt. Hierzu kann ein Zackenschnittmesser eingesetzt werden, wie es an sich aus der DE 43 18 277 C1 für den Einsatz von Polypropylen-Folien bekannt ist.

Die Herstellung eines solchen Klebebandes umfasst folgende Schritte:

### 1. Trägermaterial Design

Insbesondere für Polyester-Gewebe-Träger können erfindungsgemäß bevorzugt Fadenkonstruktionen mit 45 ± 3 Kettfäden und 23 ± 2 Schussfäden eingesetzt werden, wobei der Einsatz von bevorzugt ungleichartigen Fäden in Kette und Schuss ebenfalls als günstig im Hinblick auf eine erhöhte Abriebbeständigkeit angesehen werden kann.

Die Feinheit der Kettfäden kann dabei unter 100 dtex, insbesondere bei 56 dtex, und die der Schussfäden bei über 400 dtex, insbesondere bei 557 dtex, liegen, wobei die Feinheit der Kettfäden zur Feinheit der Schussfäden in einem als optimal angesehenen Verhältnis von 1 : 8 - 11, vorzugsweise von 1 : 10, steht. Kettfäden und Schussfäden können sich dabei bevorzugt auch aus einer jeweils unterschiedlichen Anzahl von Filamenten zusammensetzen. Im Allgemeinen ist dabei eine Anzahl im Bereich von 24 bis 144 Filamenten pro Faden möglich, wobei aber mit zunehmender Filamentzahl von einer Verringerung der Abriebfestigkeit auszugehen ist.

Vorteilhaft erhöhend auf die Abriebbeständigkeit wirkt sich auch der Einsatz von texturierten Fäden aus. Mit Texturieren bezeichnet man in der Textilindustrie einen Vorgang, durch den Chemiefasern dauerhaft gekräuselt werden. Die glatten synthetischen Fäden erhalten durch diese Veredelung einen naturfaserähnlichen Charakter und einen textilen Griff. Das Texturieren geschieht meist unter dem Einfluss von Hitze und Druck, wobei eine Thermoplastizität der Fasern ausgenutzt wird. Durch eine Kräuselung der Fasern bei der Texturierung werden Faserschlingen erzeugt, durch die es zu einer Volumenzunahme kommt, wobei die elastische Dehnbarkeit ansteigt, während sich die Wärmeleitfähigkeit vermindert.

Zur Durchführung des Texturierens sind verschiedene, insbesondere mechanische, mechanisch-thermische und chemisch-thermische Verfahren bekannt. So wird bei dem sogenannten Falschdrahtverfahren ein Faden mit bis zu 1000 Drehungen/m verdrillt und heiß fixiert. Nach dem Zurückdrehen bleibt in den einzelnen Filamenten eine fixierte Spiralstruktur erhalten. Bei der Stauchkräuselung wird ein Faserverbund durch beheizte Walzen in eine Kammer mit keilförmig angeordneten Wänden gepresst und dadurch gestaucht und gekräuselt, wobei die Kräuselung durch die Kammerheizung fixiert wird. Bei der Blastexturierung wird ein Filamentgarn durch eine Düse geführt, durch die gleichzeitig Druckluft gepresst wird. Beim Austritt aus der Düse verwirbelt die Luft, löst das Garn dadurch teilweise in seine Einzelfilamente auf und verschlauft sie danach wieder, wonach in einer Fixierzone eine abschließende Stabilisierung erfolgt, die auch mit einer Verfestigung und Schrumpfung verbunden ist.

Filamentgarne, insbesondere Polyestergarne, sind im Handel in Titerbereichen von insbesondere 33 dtex bis 660 dtex als Glattgarn in verschiedenen Formen erhältlich, so als FDY - Fully Drawn Yarn bzw. FOY - Fully Oriented Yarn, oder als POY - Partially Oriented Yarn; aber auch texturiert: DTY - Drawn Textured Yarn. In den Fäden der Gewebe, die zur Bildung des Trägers eingesetzt werden, können mit Vorteil Filamente der verschiedenen Garnformen kombiniert sein. So können insbesondere, wie im speziellen Ausführungsbeispiel noch dargestellt, Schussfäden jeweils aus einer Kombination von FDY- und DTY-Filamenten bestehen, wodurch der Fadenzusammenhalt erhöht wird, was insbesondere bei dickeren Fäden, also Fäden einer höheren Feinheit, von Bedeutung ist.

Außerdem kann mit Vorteil auch vorgesehen sein, dass in dem Gewebe der ersten textilen Schichtlage und/oder in dem Gewebe der zweiten textilen Schichtlage jeweils die Kettfäden und/oder die Schussfäden intermingelt sind, wobei insbesondere 50 bis 150 Intermingelungspunkte pro Meter vorliegen. Das Intermingeln - auch Interlacing genannt - ist eine Zusatzausrüstung der Fäden, bei der die Fäden durch eine Verwirbelung mit Luft punktuell verflochten werden. Dabei wird der Zusammenhalt der einzelnen Filamente nicht durch ein Verdrehen, sondern durch eine Verschlingung der Filamente erreicht. Das Intermingeln kann mit glatten Fäden durchgeführt werden, es ist aber auch möglich, und erfindungsgemäß bevorzugt, ein Intermingeln im direkten Anschluss an ein Texturieren der Fäden durchzuführen.

### 2. Auswahl des Klebstoffes

Die Klebverbindungsschicht kann dabei mit Vorteil aus einem Hotmeltklebstoff bestehen, insbesondere aus einem Hotmeltklebstoff, der überwiegend aus einem Ethyl-Acrylat-Copolymer, wie einem Ethyl-Butyl-Acrylat oder einem Ethyl-Ethylen-Acrylat, oder überwiegend aus einem Ethylen-Vinyl-Acetat-Copolymer (EVA), besteht, wobei das jeweilige Copolymer vorzugsweise mit UV-vernetzbaren Acrylatharzen modifiziert ist und/oder einpolymerisierte UV-C-fotoreaktive Gruppen insbesondere in der Seitenkette enthält.

Der Klebstoff trägt einerseits zur Abrieberhöhung bei, andererseits sind dadurch eine Düsenbeschichtung des Trägers und Herstellung des erfindungsgemäßen Klebebandes mittels konventioneller Hotmelt-Coater möglich, die üblicherweise für Dispersions- und lösemittelhaltige Kleber ausgelegt sind.

### 3. Beschichtungsverfahren

Der Klebstoff kann insbesondere in einem drucklosen Beschichtungsverfahren, wie dem sogenannten "Curtain Coating-Verfahren", aufgebracht werden. Gemäß diesem Verfahren fällt ein geschlossener Klebstofffilm auf das Substrat. Dadurch wird eine gleichmäßige Dicke und damit Grammatur der Klebstoffschicht erreicht. Es wird nur soviel Klebstoff aufgetragen, wie unbedingt benötigt wird.

### 4. Beschichtung der Trägerlagen

Dadurch kann erfindungsgemäß das Flächengewicht sowohl der Klebverbindungsschicht im Bereich von 50 bis 300 g/m2, als auch der Klebebeschichtung bevorzugt im Bereich von etwa 50 g/m2 bis 300 g/m2, vorzugsweise im Bereich von 55 g/m2 bis 150 g/m2, genau eingestellt werden. Die Grammatur der Klebverbindungsschicht und der Klebebeschichtung können auf die gleiche Größe eingestellt werden. Bei alternativen Produktaufbauten können auch differente Kleberaufträge der Klebverbindungsschicht und der Klebebeschichtung eingestellt werden.

Insbesondere ist es dabei auch möglich, eine im Rahmen der Erfindung als optimal betrachtete, nach DIN EN 1939 (Stand 2003) bestimmte Laminathaftkraft zwischen der ersten textilen Schichtlage und der zweiten textilen Schichtlage des Trägers auf einen Wert einzustellen, der größer ist als 10 N/cm.

Der Verbund mittels des genannten Hotmeltklebstoffs wirkt sich gegenüber dem Einsatz der anderen erwähnten Klebstoffe mit steigendem Flächengewicht im erfindungsgemäß beanspruchten Bereich vorteilhafterweise auch überproportional erhöhend auf die Abriebfestigkeit aus.

### 5. Laminierung der Trägerlagen

Die Laminierung kann Inline oder Offline in einem separaten Arbeitsgang erfolgen. Das Trägermaterial der Mutterrolle, das aus dem Laminat besteht, ist je nach Materialkombination bedingt handeinreißbar oder nicht handeinreißbar.

Die Herstellung des erfindungsgemäßen Klebebandes umfasst dabei ein Laminieren der Gewebeschichten des Trägers aneinander, ein Auftragen der Klebeschicht auf mindestens eine Seite des Laminats, wobei insbesondere nach dem Laminieren das Gewebe bzw. das Klebeband nach dem Auftragen mit der Klebeschicht noch nicht quer einreißbar ist, ein Aufwickeln zu einer Mutterrolle großer Breite und - in einem abschließenden Fertigungsschritt - den Zuschnitt der Mutterolle zu verkaufsfähigen handelsüblichen Schmalrollen, wobei die Mutterrolle mittels eines Rollenschneiders getrennt wird. Bei dieser Konfektionierung wird insbesondere durch den Einsatz eines Zick-Zack-Messers das Klebeband mit der Kantenstrukturierung versehen und wird so per Hand quer einreißbar.

### 6. Konfektionierung der Mutterrollen zur Schmalrolle

Bei der Konfektionierung der Mutterrolle zur Schmalrolle wird durch den Einsatz eines geeigneten Konfektionierungsverfahrens die Handeinreißbarkeit der Schmalrolle optimiert, dahingehend, dass nach der Konfektionierung die Schmalrolle eine gute bis bedingte Handreinreißbarkeit aufweist. Dieses wird zum Beispiel durch Einsatz eines Rollenschneiders, der mit Zick-Zack-Kreismesser ausgerüstet ist, erreicht. Derartige Zick-Zack-Messer haben eine Kantenstrukturierung unterschiedlicher Art. In der DE 10 2012 202 635 A1 wird der Einsatz unterschiedlicher Zick-Zack-Messer u. a. auch für einlagige Gewebe beschrieben. Für ein Klebeband wird dabei gefordert, dass sein Träger einen zackenförmigen Einschnitt aufweist, der in einer Spitze endet, wobei diese durch einen an der Spitze beginnenden und in medialer Richtung verlaufenden Schnitt verlängert ist.

Durch die gezielte Randverletzung wird die Handeinreißbarkeit verbessert. Außerdem kann die Reißfestigkeit durch die Art der Bandkante in Form eines von einer geraden Linie abweichenden Musters, welches mittels des Trennprozesses strukturiert ist, gezielt verringert werden, wobei sich die Reißfestigkeit um bis zu 40 % gegenüber einem Ausgangswert, der nach DIN EN 14410 an einem Material ohne Randstrukturierung gemessen wird, verringerbar ist. Durch den Zick-Zack-Randbeschnitt werden auch andere Klebebandeigenschaften, wie z.B. Bruchkraft, Reißdehnung und Weiterreißfestigkeit beeinflusst.

Es besteht auch die Möglichkeit, für die Herstellung der Schmalrollen Umroll- und Schneidautomaten mit Messerstichel einzusetzen.

Weitere vorteilhafte Ausgestaltungsmerkmale der Erfindung sind in den Unteransprüchen sowie der folgenden Beschreibung enthalten. Anhand eines durch die beiliegende Zeichnung veranschaulichten erfindungsgemäßen Ausführungsbeispiels und eines Vergleichsbeispiels wird die Erfindung näher erläutert. Dabei zeigen:
- Fig. 1: in einer Querschnittsdarstellung, eine Ausführung eines erfindungsgemäßen Klebebandes,
- Fig. 2: in einer Aufsicht, einen Ausschnitt auf eine Ausführung eines erfindungsgemäßen Klebebandes,
- Fig. 3: eine perspektivische Ansicht eines zur Herstellung eines erfindungsgemäßen Klebebandes einsetzbaren Messers,
- Fig. 4: eine Aufsicht in Richtung des Pfeiles IV in Fig. 3 und 5 auf eine Schneidkante eines zur Herstellung eines erfindungsgemäßen Klebebandes einsetzbaren Messers,
- Fig. 5: einen Querschnitt durch ein zur Herstellung eines erfindungsgemäßen Klebebandes einsetzbaren Messers, wobei die Peripherie des Messers (Einzelheit V) derart geschnitten dargestellt ist, wie sich dies aus der Linie V-V in Fig. 4 ergibt,
- Fig. 6: eine schematisierte perspektivische Darstellung zur Veranschaulichung des erfindungsgemäßen Verfahrensschrittes bei der Herstellung eines erfindungsgemäßen Klebebandes.

Zu der anschließenden Beschreibung wird ausdrücklich betont, dass die Erfindung nicht auf das Ausführungsbeispiel und dabei auch nicht auf alle oder mehrere Merkmale von beschriebenen Merkmalskombinationen beschränkt ist. Vielmehr kann jedes einzelne Teilmerkmal des Ausführungsbeispiels auch losgelöst von allen anderen im Zusammenhang damit beschriebenen Teilmerkmalen für sich und auch in Kombination mit beliebigen anderen Merkmalen eine erfinderische Bedeutung haben.

In den Figuren der Zeichnung sind gleiche und einander entsprechende Teile auch stets mit denselben Bezugszeichen versehen, so dass sie in der Regel auch jeweils nur einmal beschrieben werden.

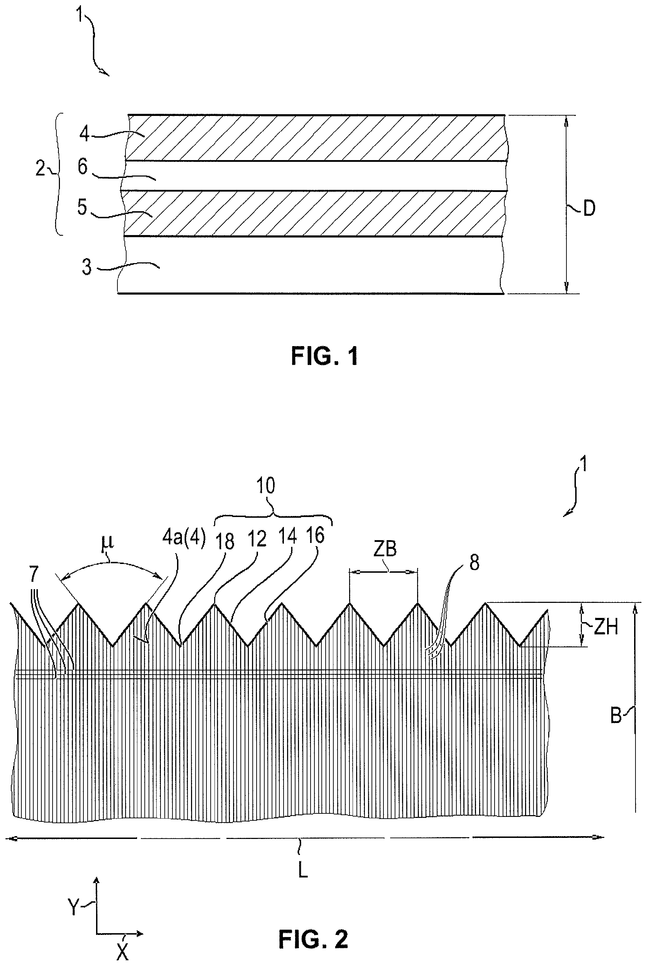

Wie zunächst Fig. 1 veranschaulicht, umfasst ein erfindungsgemäßes, hoch abriebfestes technisches Klebeband 1, insbesondere ein ohne Interliner auf sich selbst wickelbares Kabelwickelband 1 für den Automobilbau, einen bandförmigen, doppellagigen Träger 2, der mindestens auf einer Seite mit einer selbstklebenden Klebebeschichtung 3 versehen ist, die aus einem Haftklebstoff besteht. Als Haftklebstoffe sind dabei an sich bekannte Klebstoffe, insbesondere UV-vernetzbare Klebstoffe einsetzbar, wobei diese keiner weiteren Modifizierung bedürfen.

Der Träger 2 umfasst eine erste, aus einem Gewebe bestehende textile Schichtlage 4 und eine zweite textile Schichtlage 5, die vollfächig durch eine Klebverbindungsschicht 6 fest miteinander verbunden sind. Erfindungsgemäß ist vorgesehen, dass beide Schichtlagen 4, 5, also die erste textile Schichtlage 4 und zweite textile Schichtlage 5, aus einem Gewebe bestehen, wobei das Gewebe der ersten textilen Schichtlage 4 und das Gewebe der zweiten textilen Schichtlage 5 jeweils ein Flächengewicht im Bereich von 50 g/m² bis 300 g/m², vorzugsweise 110 g/m² bis 200 g/m², aufweist.

Fig. 2 zeigt eine Draufsicht auf die den Bandrücken bildende Oberfläche 4a der ersten textilen Schichtlage 4. In der figürlichen Darstellung sind dabei die in Bandlängsrichtung X verlaufenden Kettfäden 7 und die in Bandquerrichtung Y verlaufenden Schussfäden 8 des Gewebes zu sehen.

Bevorzugt kann es sich bei dem Gewebe der zweiten textilen Schichtlage 5 um das gleiche Gewebe handeln wie in der ersten textilen Schichtlage 4, insbesondere um ein Gewebe, das zu 100 Prozent aus Polyethylenterephthalat (PET) bestehenden Polyesterfasern gebildet ist. Ein solches Gewebe bildet einen verrottungsfesten Träger 2 und kann insbesondere jeweils ein Flächengewicht im Bereich von 50 g/m² bis 300 g/m², vorzugsweise von 110 g/m² bis 200 g/m², aufweisen.

Die Klebverbindungsschicht 6 weist erfindungsgemäß ein Flächengewicht im Bereich von 50 g/m² bis 300 g/m² auf, wobei hier Werte im Bereich von 55 g/m² bis 150 g/m² bevorzugt, und Werte im Bereich von 80 g/m² bis 120 g/m² besonders bevorzugt sind.

Die Klebverbindungsschicht 6 kann insbesondere aus einem Acrylat- oder Acetatklebstoff bestehen, vorzugsweise aus einem Hotmeltklebstoff, wie er auch für die Herstellung der Klebebeschichtung 3 zur Anwendung kommt. Ein derartiger Hotmeltklebstoff kann auf der Basis eines Ethyl-Acrylat-Copolymers, wie einem Ethyl-Butyl-Acrylat oder einem Ethyl-Ethylen-Acrylat, oder auf der Basis eines Ethylen-Vinyl-Acetates hergestellt sein, d. h. überwiegend aus diesen Polymeren bestehen, wobei die Polymere mit UV-vernetzbaren Acrylatharzen modifiziert sein und/oder einpolymerisierte UV-C-fotoreaktive Gruppen, insbesondere in Seitenketten, enthalten können.

Auch die Klebebeschichtung 3 kann ein Flächengewicht im Bereich von etwa 50 g/m² bis 300 g/m² mit den für die Klebeverbindungsschicht 6 angegebenen Vorzugsbereichen aufweisen. Die Auftragung auf den Träger 2 kann in technologisch vorteilhafter Weise unter Anwendung des oben erwähnten Curtain-Coating-Verfahrens erfolgen.

Die Bestimmung der Flächengewichte sowohl der Klebebeschichtung 3 und/oder der Klebverbindungsschicht 6, als auch der beiden aus Gewebe bestehenden textilen Schichtlagen 4, 5 erfolgt dabei in üblicher Weise nach der Norm DIN EN ISO 2286-2 "Mit Kautschuk oder Kunststoff beschichtete Textilien - Bestimmung der Rollencharakteristik - Teil 2: Bestimmung der flächenbezogenen Gesamtmasse, der flächenbezogenen Masse der Beschichtung und der flächenbezogenen Masse des Trägers".

Bei einer Dicke D, die mindestens bei 0,50 mm liegt, vorzugsweise bei einer Dicke D im Bereich von 0,50 mm bis 1,0 mm, besonders bevorzugt bei einer Dicke im Bereich von 0,55 mm bis 0,75 mm, erreicht das erfindungsgemäße Klebeband 1 dabei eine Abriebbeständigkeit nach LV 312 von mindestens der Klasse E, insbesondere eine Abriebbeständigkeit im Bereich von 5500 bis 10000 Hüben, bestimmt an einem 5-mm-Dorn.

Das erfindungsgemäße Klebeband ist dabei manuell und maschinell verarbeitbar und weist mit Vorteil entsprechend der LV 312 eine Temperaturstabilität von 125 °C und mehr auf.

Bei einer hohen Schmiegsamkeit und Flexibilität des erfindungsgemäßen Klebebandes 1 kann eine Verbundfestigkeit zwischen der ersten textilen Schichtlage 4 und der zweiten textilen Schichtlage 5 des Trägers 2 eingestellt werden, die ausreichend ist, dass es bei der Verarbeitung, insbesondere beim Abziehen von einer Klebebandrolle, oder auch gegebenenfalls beim Wiederablösen von einem umwickelten Gegenstand, wie einem Kabelbaum, nicht zu einer Delamination der Schichtlagen 4, 5 kommt.

Eine nach DIN EN 1939 bestimmte Laminathaftkraft zwischen der ersten textilen Schichtlage 4 und der zweiten textilen Schichtlage 5 des Trägers 2 ist dabei größer als 10 N/cm und liegt vorzugsweise im Bereich von 12 N/cm bis 15 N/cm, während eine nach DIN EN 1939 bestimmte Klebkraft auf dem Bandrücken 4a kleiner ist als die Laminathaftkraft zwischen den Schichtlagen 4, 5 und insbesondere im Bereich von 4,0 N/cm bis 15,0 N/cm, bevorzugt von 5,5 N/cm bis 8,0 N/cm, liegen kann. Eine nach DIN EN 1944 bestimmte Abrollkraft kann dabei insbesondere im Bereich von 2 N bis 15 N, bevorzugt im Bereich von 2 N bis 9 N, liegen.

Mit dem erfindungsgemäßen Klebeband 1 sind dabei vorteilhafterweise hohe Klebkräfte erzielbar. So kann bei einer Prüfung nach DIN EN 1939 die Klebkraft auf Stahl Werte im Bereich von 4,5 N/cm bis 15,0 N/cm, vorzugsweise von 6,0 N/cm bis 11,0 N/cm, annehmen.

Typische bevorzugte Parameter des Gewebeaufbaus und die Charakteristik der Fasermaterialien für eine bevorzugte Ausführung eines erfindungsgemäßen Klebebandes 1 sind der nachstehenden Tabelle 3 zu entnehmen.

**Tabelle 3: Gewebeaufbau und Fasermaterialbeschreibung**

| Merkmal | Einheit | Eigenschaft / Messwert |
|---|---|---|
| Material des Trägers 2 | --- | Polyestergewebe |
| Flächengewicht von 4, 5 | g/m² | je 155 |
| Faserart | --- | 100 % Polyester (PET) |
| Anzahl der Kettfäden 7 | 1/cm | 45 |
| Garnart Kettfaden 7 | --- | Filament, intermingelt / texturiert und spinndüsengefärbt |
| Filamentanzahl pro Kettfaden 7 | Stück | 36 |
| Feinheit der Kettfäden 7 | dtex | 56 |
| Auf die Breite B bezogene Feinheit der Kettfäden 7 | dtex/cm | 2520 dtex/cm |
| Anzahl der Schussfäden 8 | 1/cm | 23 |
| Garnart Schussfäden 8 | --- | Filament, intermingelt und miteinander verbunden / texturiert und spinndüsengefärbt |
| Filamentanzahl pro Schussfaden 8 | Stück | Kombination aus 72 + 36 (Insgesamt: 108 Stück) |
| Feinheit der Schussfäden 8 | dtex | Kombination aus 334 + 223 (334 FDY- Garn + 223 DTY-Garn) |
| Auf die Länge L bezogene Feinheit der Schussfäden 8 | dtex/cm | > 11.000 dtex/cm |

Mit derartigen Geweben, die sowohl für die erste textile Schichtlage 4, als auch für die zweite textile Schichtlage 5 eingesetzt wurden, konnten bei einem erfindungsgemäßen Klebeband 1 die in der nachstehenden Tabelle 4 wiedergegebenen technischen Eigenschaften erzielt werden.

**Tabelle 4: Technische Daten eines erfindungsgemäßen PET-Gewebe-Verbund-Klebebandes 1 im Vergleich**

| Prüfung | Einheit | Erfindung | Vergleich |
|---|---|---|---|
| Dicke | mm | 0,50 - 0,58 | 1,0 - 1,1 |
| Reißdehnung | % | 35 - 36 | 25 - 28 |
| Reißfestigkeit | N/cm | 90 - 140 | 250 - 290 |
| Klebkraft - Stahl | N/cm | 6,0 - 11,0 | 4,3 - 8,1 |
| - Bandrücken 4a | N/cm | 2,0 - 6,0 | 3,0 - 6,9 |
| Abrollkraft | N/19mm | 3 - 7 | 3 - 7 |
| Flagging - 30 min | mm | 0 - 1 | 0 - 1 |
| - 24 h | mm | 0 - 1 | 0 - 1 |
| Abrieb 5-mm-Dorn | Hübe | 5500 - 8200 | 5300 - 6200 |
| Laminathaftkraft | N/cm | 12 - 15 | 6 - 8 |
| Geräuschdämpfung | Klasse | B | E |
| Quereinreißbarkeit LV 312 | | ja | nein |

Die entsprechenden Parameterwerte sind zum Vergleich denjenigen eines marktüblichen Klebebandes mit einem zweilagigen Träger aus einer PET-Gewebeschicht und einer Vliesschicht gegenübergestellt.

Bezüglich des erfindungsgemäßen Bandes ist die Reißfestigkeit stark abhängig davon, wie das Material konfektioniert worden ist. Klebebänder die mit einem normalen Messer ohne Kantenvernetzung konfektioniert worden sind, haben eine Reißfestigkeit von > 130 N/cm. Diese Bänder sind erfahrungsgemäß sehr schwer quereinreißbar. Bei der sogenannten Zackenkonfektionierung mit Mikro- oder Makrozacken, liegen deutlich geringere Reißfestigkeiten vor. Das heißt, beim Mikrozacken liegt eine Reißfestigkeit von ca. 125 N/cm vor. Die Reißfestigkeit ist als gut zu bezeichnen. Während hingegen bei einem Makrozacken die Reißfestigkeit bei ca. 100 N/cm liegt und die Quereinreißbarkeit als sehr gut zu bezeichnen ist. Hierzu wird auf die folgenden Tabellen 4a und 4b verwiesen, woraus sich ergibt, wie die Reißdehnung, die Reißfestigkeit und die Weiterreißfestigkeit durch das jeweilige Konfektionierungsverfahren beeinflusst wird, d. h. eingestellt werden kann.

**Tabelle 4a:**

| Prüfung | Einheit | Konfektion ierungsversuch 1 Geradliniges Messer | Konfektionierungsversuch 2 Mikrozackenmesser | Konfektion ierungsversuch 3 Makrozackenmesser |
|---|---|---|---|---|
| Reißdehnung | % | 35 | 30 | 28 |
| Reißfestigkeit | N/cm | 130 | 125 | 100 |
| Quereinreißbarkeit | LV 312 | schwer | leicht | sehr leicht |

**Tabelle 4 b:**

| Prüfung | Einheit | Konfektion ierungsversuch 1 Geradliniges Messer | Konfektionierungsversuch 2 Mikrozackenmesser | Konfektion ierungsversuch 3 Makrozackenmesser |
|---|---|---|---|---|
| Weiterreißfestigkeit | mN | 10.000 - 12.000 | 8.000 - 10.000 | 5.000 - 8.000 |

Die in den vorstehenden Tabellen enthaltenen Parameter werden nach den in der folgenden Tabelle 5 angegebenen Normen und Messverfahren bestimmt.

**Tabelle 5:**

| DIN Normen | Neue Bezeichnung | Datum der aktuell gültigen Version | |
|---|---|---|---|
| EN ISO 2286-2 | | 1998-07 | Flächengewicht |
| DIN 53830-3 | | 1981-05 | Bestimmung der Feinheit von Garnen |
| DIN EN 1049-2 | | 1994-02 | Bestimmung der Anzahl der Fäden je Längeneinheit |
| DIN EN 1942 | | 2008-06 | Dicke |
| DIN EN 14410 | | 2003-06 | Bruchkraft/Dehnung |
| DIN EN 1939 | | 2003-12 | Klebkraft |
| DIN EN 1944 | | 1996-04 | Abrollkraft |
| DIN EN 21974 | DIN EN ISO 1974:2012-09 | 2012-09 | Weiterreißfestigkeit |
| DIN EN ISO 9237 | | 1995-12 | Luftdurchlässigkeit |
| DIN 53 362 | | 2003-10 | Biegesteifigkeit |
| LV 312 | LV 312-1 | 2009-10 | Schutzsysteme für Leitungssätze in Kraftfahrzeugen Klebebänder; Prüfrichtlinie |
| LV 312 | LV 312-1 | 2009-10 | Flagging |
| LV 312 | LV 312-1 | 2009-10 | Handeinreißbarkeit |

Die in der Tabelle 4 angegebene Geräuschdämpfung nach LV 312 der Klasse B bedeutet, dass eine Geräuschdämpfung im Bereich von 2 dB (A) bis 5 dB (A) nach LV 312 vorliegt.

Neben der schon erwähnten hohen Abriebfestigkeit weist das erfindungsgemäße Klebeband 1 auch eine hohe Reißfestigkeit auf, die sich in Werten äußert, welche im Bereich von 90 N/cm bis 200 N/cm, vorzugsweise von 100 N/cm bis 120 N/cm, bei einer Prüfung nach DIN EN 14410 liegen. Die Reißdehnung lag dabei, wie in Tabelle 4 angegeben, im Bereich von 30 Prozent bis 40 Prozent. Sie sollte vorzugsweise größer sein als 20 Prozent.

Im Hinblick auf die in den Tabellen 3 und 4 nicht aufgeführten Flächengewichte der Klebebeschichtung 3 und der Klebverbindungsschicht 6 ist zu bemerken, dass diese im dargestellten Ausführungsbeispiel beide einheitlich im Bereich von 90 g/m² bis 100 g/m² lagen. Dennoch ist die Laminathaftkraft - bestimmt nach DIN 1939 - des erfindungsgemäßen Klebebandes 1 zwischen der ersten textilen Schichtlage 4 und der zweiten textilen Schichtlage 5 des Trägers 2 größer als die nach der gleichen Norm ermittelte Klebkraft auf dem Bandrücken 4a. Dies ist erforderlich, damit es bei einem Abziehen des Klebebandes 1 von der Rolle nicht zu einer Delamination der Schichtlagen 4, 5 kommt. Die vergleichsweise größere Laminathaftkraft kann dabei durch eine stärkere Vernetzung des Klebers in der Klebverbindungsschicht 6, beispielsweise durch eine höhere Strahlungsleistung einer dazu eingesetzten UV-Quelle, durch eine bei gegenüber der Raumtemperatur bis in den Bereich von 50 °C bis 140 °C erhöhte Temperatur oder durch einen um 0,05 bar bis 6,0 bar gegenüber dem Atmosphärendruck erhöhten Druck beim Laminierungsprozess der textilen Schichtlagen 4, 5, oder durch eine von der Kleberrezeptur in der Klebebeschichtung 3 abweichende Rezeptur des Klebers in der Klebverbindungsschicht 6 erzielt werden.

Wie oben erwähnt, werden von der Firma BASF SE unter dem Markenzeichen acResin® Kleber für die UV-Vernetzung angeboten. Die Polymerketten der in diesen Klebern enthaltenen Acrylate werden aus den gleichen Acrylatmonomeren hergestellt, wie sie in Acrylat-Haftklebstoffsystemen auf Dispersions- oder Lösemittelbasis zu finden sind. Bei einer Bestrahlung mit UV-C-Licht (250 - 260 nm) werden jedoch einpolymerisierte UV-C-reaktive Gruppen zu Vernetzungsreaktionen mit benachbarten Acrylatketten angeregt. Eine solche Vernetzung läuft dabei sehr schnell, aber genau kontrollierbar ab und erfolgt nur so lange, wie das UV-Licht einwirkt. Die einpolymerisierten, insbesondere in Seitenketten des acResins® befindlichen, fotoreaktiven Gruppen des Polymers reagieren dabei mit einer beliebigen C-H-Gruppe einer Nachbarkette. So entsteht die für Haftklebstoffe charakteristische Vernetzungsstruktur. Eine typische Größe der Haftkraft einer Klebebeschichtung 3, die auf diese Weise einstellbar ist, liegt bei etwa 6 N/cm nach DIN 1939. Durch die Modifikation eines solchen acResin®-Klebers mit Harzen und/oder siegelfähigen Elastomeren können in der Klebverbindungsschicht 6 vergleichsweise höhere Laminat-Haftkräfte eingestellt werden, insbesondere Haftkräfte, welche größer sind als 10 N/cm nach DIN 1939.

Abweichend von den genannten Angaben für das dargestellte Ausführungsbeispiel können - bei gleicher oder auch bei unterschiedlicher Kleberrezeptur - natürlich unterschiedliche Haftkräfte in der Klebebeschichtung 3 und in der Klebverbindungsschicht 6 auch durch entsprechend unterschiedlich gewählte Klebergrammaturen eingestellt werden. So kann der Kleberauftrag in den klebenden Schichten 3, 6 in den angegebenen Bereichen und Vorzugsbereichen entsprechend frei kombiniert werden, wobei in jedem Fall gewährleistet werden kann, dass in der Klebverbindungsschicht 6 die genannte Laminathaftkraft von mehr als 10 N/cm nach DIN 1939 vorliegt.

Als erfindungswesentlich ist es anzusehen, dass mindestens eine Bandkante 10 des erfindungsgemäßen Klebebandes 1 in Form eines von einer geraden Linie abweichenden Musters ausgeführt ist, welches mittels eines Trennprozesses strukturiert ist, wie dies in Fig. 2 dargestellt ist.

In der in Fig. 2 dargestellten bevorzugten Ausführung ist dabei vorgesehen, dass die Bandkanten 10 als Zick-Zack-Schnittkanten ausgebildet sind, welche durch ein Zahnmuster mit Zahnspitzen 12, Zahnflanken 14, 16 und Zahnfüßen 18 beschrieben werden kann. Dabei kann eine Zahnhöhe ZH zwischen den Zahnspitzen 12 und den Zahnfüßen 18 des Musters im Bereich von 0,1 mm bis 3,0 mm liegen, bevorzugt im Bereich von 0,5 mm bis 2,0 mm, wobei durch den Trennprozess in der Nähe der Bandkante 10 liegende äußere Kettfäden 7 im Bereich der Zahnflanken 14, 16 abgeschnitten oder im Bereich der Zahnfüße 18 zumindest angerissen sind. Die Anzahl der solchermaßen geschwächten Kettfäden 7 kann an jeder Kante 10 im Bereich von 3 bis 12, bevorzugt im Bereich von 5 bis 7, liegen. Die Schussfäden 8 werden durch den Trennprozess nur auf unterschiedliche Längen gekürzt.

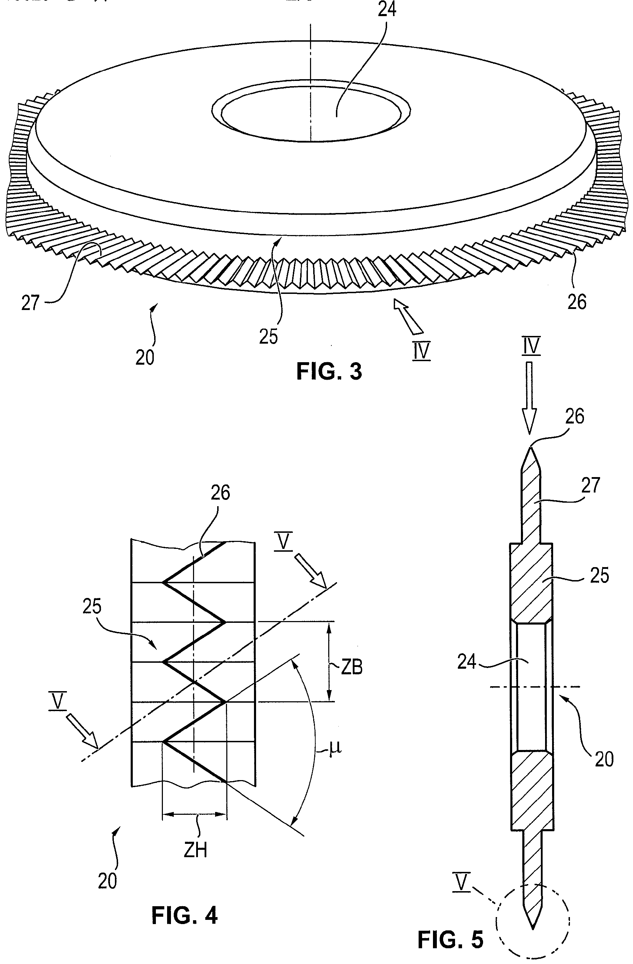

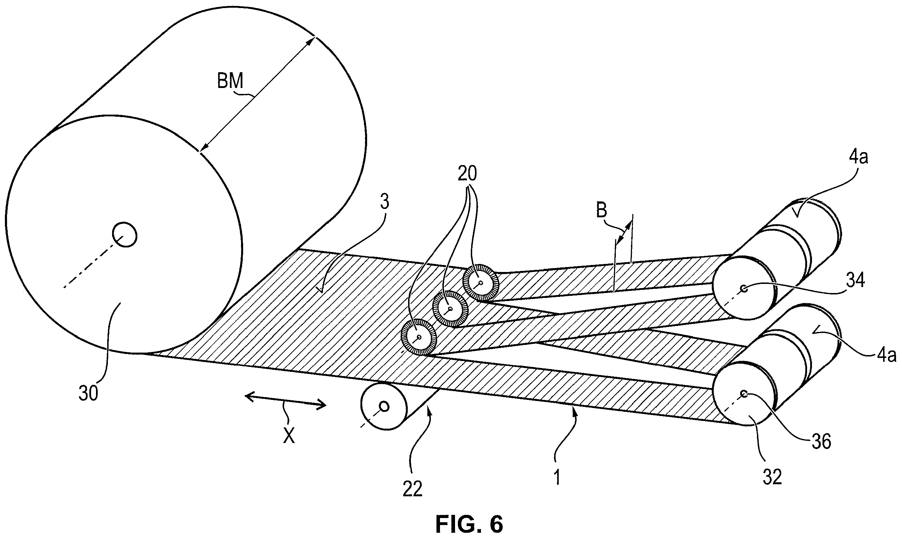

Als Werkzeug für den Trennprozess bei der Herstellung eines erfindungsgemäßen Klebebandes 1 kann insbesondere ein Zick-Zack-Messer 20 eingesetzt werden, wie dies in Fig. 3 bis 5 dargestellt ist. Fig. 6 veranschaulicht dabei diesen erfindungsgemäßen Verfahrensschritt bei der Herstellung des erfindungsgemäßen Klebebandes 1. Durch den Einsatz des Zick-Zack-Messers 20 erhält das erfindungsgemäße Klebeband 1 die vorstehend beschriebene Struktur seiner Kanten 10 und wird so per Hand leicht quer einreißbar.

Das bei der Herstellung des erfindungsgemäßen Klebebandes 1 bevorzugt einsetzbare, scheibenförmige Zick-Zack-Messer 20 kann dabei auf eine Welle eines an sich als Trenneinrichtung 22 bekannten Rollenschneiders gesetzt werden, wie dies in Fig. 6 schematisch gezeigt ist, und besitzt dazu eine zentrische Montageöffnung 24 in seinem Grundkörper 25.

Das Zick-Zack-Messer 20 weist eine über seinen Umfang umlaufende zick-zackförmige Schneidkante 26 auf, deren bevorzugte Geometrie insbesondere Fig. 4 zu entnehmen ist. Diese Geometrie bildet sich beim Trennen in den Bandkanten 10 des Klebebandes 1 ab und bewirkt dort die Ausbildung des Zahnmusters mit den Zahnspitzen 12, Zahnflanken 14, 16 und Zahnfüßen 18, wie sie in Fig. 2 dargestellt ist. Dementsprechend findet sich die Zahnhöhe ZH zwischen den Zahnspitzen 12 und den Zahnfüßen 18 des Musters der Bandkante 10 in der Geometrie der Schneidkante 26 des Zick-Zack-Messers 20 in Fig. 4 wieder, die dann auch mit gleicher Größe dimensioniert sein kann. Ein Zahnspitzenwinkel µ der Schneidkante 26 des Zick-Zack-Messers 20 kann dabei insbesondere im Bereich von 42° bis 70° liegen, und eine Zahnfußbreite ZB kann im selben Bereich liegen wie die Zahnhöhe ZH, also in einem bevorzugten Bereich von 0,5 mm bis 2,0 mm.

Das erfindungsgemäße Verfahren zur Herstellung des erfindungsgemäßen Klebebandes 1 umfasst somit die Verfahrensschritte
- Herstellung eines Trägers 2 durch Laminieren eines Gewebes einer ersten textilen Schichtlage 4 und eines Gewebes einer zweiten textilen Schichtlage 5 mittels einer Klebverbindungsschicht 6,
- Auftragen einer Klebebeschichtung 3 auf mindestens eine Seite des Laminates,
- Aufwickeln zu einer Mutterrolle 30 großer Breite BM,
- Konfektionierung der Mutterolle 30 zu Schmalrollen 32 geringer Breite B, wobei das mit der Klebebeschichtung 3 bedeckte Laminat von der Mutterrolle 30 über eine Trenneinrichtung 22 geführt wird, dort getrennt und das Klebeband 1 auf die Schmalrollen 32 gewickelt wird.

Der letzte Verfahrensschritt wird dabei durch Fig. 6 veranschaulicht.

Zur Schmalrollen-Herstellung ist also vorgesehen, dass zwischen der Breitrolle 30 und den Schmalrollen 32 mindestens insbesondere eine Schneideinrichtung 22 zum Zerteilen des mit der Klebebeschichtung 3 versehenen Trägermaterials 2 in Streifen, die in Bandlängsrichtung X verlaufen, angeordnet ist. Diese Streifen bilden jeweils die Klebebänder 1. Bei dem dargestellten Klingenschnitt taucht eine feststehende Klinge 27 zumindest jeweils einseitig in das durchlaufende, mit der Klebebeschichtung 3 versehene Trägermaterial 2 ein.

Erfindungswesentlich ist dabei, dass in der Trenneinrichtung 22 mindestens ein Zick-Zack-Messer 20 zur Herstellung der Bandkanten 10 des Klebebandes 1 eingesetzt wird, wobei das Zick-Zack-Messer (20) Zähne mit einerZahnhöhe (ZH) im Bereich von 0,1 mm bis 3,0 mm aufweist, wobei Mikrozacken mit einer Zahnhöhe (ZH) im Bereich von 0,1 mm bis <1,0 mm und Makrozacken mit einer Zahnhöhe (ZH) im Bereich von 1,0 mm bis 3,0 mm vorhanden sind, wodurch im Klebeband (1) eine Reißdehnung von mindestens 20 Prozent, eine Reißfestigkeit nach DIN EN 14410 im Bereich von weniger als 125 N/cm und eine Weiterreißbarkeit gemäß Elmendorftest von weniger als 10.000 mN eingestellt wird.

Die Streifen können insbesondere mit Vorteil dadurch vereinzelt werden, indem die separaten Schmalrollen 32 alterniernd auf unterschiedlichen Wellen 34, 36 angeordnet sind, wobei die Schmalrollen 32 durch die ihnen zugeordneten Wellen 34, 36 gleichsinnig angetrieben werden. Auf jeder Welle 34, 36 sind dabei mindestens zwei Schmalrollen 32, vorzugsweise eine Vielzahl von Schmalrollen 32 angeordnet, wobei die Wellen 34, 36 insbesondere mit gleicher Drehzahl, mit Vorteil durch einen einzigen, beispielsweise elektromotorischen, Antrieb angetrieben werden können.

Die solchermaßen hergestellten, auf Schmalrollen 32 gewickelten Klebebänder 1 haben üblicherweise Breiten B im Bereich von 9 mm bis 50 mm und Längen im Bereich von 1 m bis 100 m, bevorzugt von 2 m bis 50 m. Die Mutter- oder Ausgangsrollen 30, aus denen die einzelnen Klebebänder 1 geschnitten werden, haben üblicherweise Breiten im Bereich von 500 mm bis 2000 mm und Längen im Bereich von 300 m bis 10.000 m. Insbesondere die Rollenlängen sind stark materialabhängig. Da die Rollendurchmesser häufig technischen Begrenzungen unterliegen, können bei dünnen Trägermaterialien längere Rollen 30 gefertigt werden als bei dicken Materialien.

Wie schon aus dem Vorstehenden hervorgeht, ist die Erfindung ist nicht auf die beschriebenen Ausführungsbeispiele beschränkt, sondern umfasst auch alle im Sinne der Erfindung gleichwirkenden Ausführungen. Beispielsweise könnte anstelle eines zick-zack-förmigen Musters der Kante 10 auch ein wellenartig verlaufendes Muster gewählt werden, oder ein Muster mit einer Y-Form, oder ein Messer mit sogenannten T-Aussparungen, die eine gezielte Kantenverletzung im Millimeterbereich besitzen, ohne dass der Rahmen der Erfindung verlassen wird.

Das Schneiden in Schmalrollen kann bekanntermaßen je nach dem Material und der Dicke des Klebebandes 1 auch im Quetschschnitt, im Scherenschnitt, unter Einsatz eines Lasers, mit Ultraschallmesser oder mit einem Wasserstrahl erfolgen. Beim Quetschschnitt ist die Schneideinrichtung 22 eine solche, bei der ein Kreismesser gegen eine Walze arbeitet. Beim Scherenschnitt taucht ein Kreismesser in ein Untermesser ein. Auch bei diesen vom beschriebenen Klingenschnitt abweichenden Schnittarten ist es möglich, mindestens eine Bandkante 10 in Form eines von einer geraden Linie abweichenden Musters auszuführen, also mittels des Trennprozesses einrissbegünstigend zu strukturieren.

Auch sind z. B. in dem Ausführungsbeispiel gemäß Tabelle 3 in den Geweben der ersten textilen Schichtlage 4 und/oder in den Geweben der zweiten textilen Schichtlage 5 jeweils die Kettfäden 7 und die Schussfäden 8 unterschiedlich beschaffen, was sich in der beschriebenen Kombination positiv auf die erfindungsgemäß angestrebte vorteilhafte Kombination von hoher Abriebfestigkeit, Geräuschdämpfung und Handeinreißbarkeit auswirkt, jedoch nicht in jedem Fall so vorliegen muss.

Des Weiteren ist es sowohl - wie ebenfalls in Tabelle 3 angegeben - bevorzugt möglich, den Träger 2 aus einem spinndüsengefärbten Garn- bzw. Fadenmaterial herzustellen, als auch den Träger 2 einer Dispersionsfärbung zu unterwerfen. Bevorzugte, durch den Einsatz geeigneter Farbpigmente - vorzugsweise in Polyestermaterial - erzeugte Farbkombinationen in den textilen Schichtlagen 4, 5 eines erfindungsgemäßen Klebebandes 1 sind dabei schwarz/schwarz, schwarz/weiß und weiß/weiß. Die textilen Schichtlagen 4, 5 können also jeweils die gleichen oder unterschiedliche Farben aufweisen.

Gegebenenfalls können die Titer der Fäden 7, 8 und damit auch die auf die Breite B bezogene Fadenstärke (Feinheit) der Kettfäden 7 und/oder die auf die Länge L bezogene Fadenstärke (Feinheit) der Schussfäden 8 ― jeweils bestimmt durch Multiplikation der jeweiligen Fadenzahl je Längeneinheit mit dem jeweiligen Titer der Fäden 7, 8 - von den in der Tabelle 3 angegebenen Werten abweichen.

Der Fachmann kann die Erfindung auch durch weitere vorteilhafte technische Maßnahmen ergänzen, ohne dass der Rahmen der Erfindung verlassen wird. So fördert beispielsweise eine Kalandrierung des Trägers 2 bzw. der ersten textilen Schichtlage 4 und/oder der zweiten textilen Schichtlage 5 vor ihrer Laminierung eine Verringerung der Permeabilität des Gewebes für den Klebstoff in der Klebeschicht 3 und/oder in der Klebverbindungsschicht 6. Dies kommt dadurch zum Ausdruck, dass die Luftdurchlässigkeit des Gewebes gemessen nach DIN EN ISO 9237 bei einem Prüfdruck von 500 Pa bevorzugt geringer sein kann als 200 l/m²s. Konkret kann sie z. B. etwa bei 100 l/m²s liegen, und bei einer Messung unter einem Prüfdruck von 200 Pa kann sie bevorzugt geringer sein als 100 l/m²s und konkret bei etwa 50 l/m²s liegen. Auch bei eventuell während des Auftragens des Klebers vorhandener niedriger Viskosität des Klebstoffs kommt es so nicht zu einem Klebstoffdurchschlag durch den Träger 2.

Ferner ist die Erfindung nicht auf die in den unabhängigen Ansprüchen 1 und 28 definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann.

### Bezugszeichen

- 1: Klebeband
- 2: Träger
- 3: Klebebeschichtung
- 4: erste textile Schichtlage von 2
- 4a: Oberfläche von 4, Bandrücken
- 5: zweite textile Schichtlage von 2
- 6: Klebverbindungsschicht
- 7: Kettfaden in 4, 5
- 8: Schussfaden in 4, 5
- 10: Bandkante von 1
- 12: Zahnspitze in 10
- 14, 16: Zahnflanke in 10
- 18: Zahnfuß in 10
- 20: Zick-Zack-Messer
- 22: Trenneinrichtung mit 20
- 24: Montageöffnung für 22 in 25
- 25: Grundkörper von 20
- 26: Schneidkante von 20
- 27: Klinge von 20
- 30: Mutterrolle
- 32: Schmalrolle mit 1

- B: Breite von 1, 32
- BM: Breite von 30
- D: Dicke von 1
- L: Länge von 1
- X: Bandlängsrichtung von 1
- Y: Bandquerrichtung von 1
- ZB: Zahnbreite in 10, 26
- ZH: Zahnhöhe in 10, 26

- µ: Zahnspitzenwinkel in 10, 26

## Patentansprüche

1. Hoch abriebfestes handeinreißbares technisches Klebeband (1), insbesondere auf sich selbst zu einer Klebebandrolle aufwickelbares Klebeband (1), vorzugsweise Kabelwickelband (1), mit einem bandförmigem doppellagigem Träger (2), der auf einer Seite mit einer druckempfindlichen Klebebeschichtung (3) versehen ist, wobei der Träger (2) eine erste, aus einem Gewebe bestehende textile Schichtlage (4) und eine zweite textile Schichtlage (5) umfasst, die vollflächig durch eine Klebverbindungsschicht (6) fest miteinander verbunden sind, wobei
die zweite textile Schichtlage (5) aus einem Gewebe besteht, wobei das Gewebe der ersten textilen Schichtlage (4) und das Gewebe der zweiten textilen Schichtlage (5) jeweils ein Flächengewicht im Bereich von 50 g/m² bis 300 g/m² aufweist, wobei die Klebverbindungsschicht (6) ein Flächengewicht im Bereich von 50 g/m² bis 300 g/m² aufweist und wobei das Klebeband (1) eine Dicke (D) im Bereich von 0,55 mm bis 1,0 mm aufweist und mindestens eine Bandkante (10) in Form eines von einer geraden Linie abweichenden Musters ausgeführt ist, welches mittels eines Trennprozesses durch eine Trenneinrichtung (22), die Mikrozacken mit einer Zahnhöhe (ZH) im Bereich von 0,1 mm bis <1,0 mm und Makrozacken mit einer Zahnhöhe (ZH) im Bereich von 1,0 mm bis 3,0 mm aufweist, derart strukturiert ist, dass eine Reißfestigkeit bei einer Prüfung nach DIN EN 14410 kleiner ist als 125 N/cm, wobei eine Reißdehnung mindestens 20 Prozent beträgt und eine Weiterreißfestigkeit gemäß Elmendorftest kleiner ist als 10.000 mN.

2. Klebeband (1) nach Anspruch 1,
**dadurch gekennzeichnet, dass** beide Bandkanten (10) als Zick-Zack-Schnittkanten ausgebildet sind, welche durch ein Zahnmuster mit Zahnspitzen (12), Zahnflanken (14, 16) und Zahnfüßen (18) beschrieben sind.

3. Klebeband (1) nach Anspruch 1 oder 2,
**dadurch gekennzeichnet, dass** eine Zahnhöhe (ZH) zwischen den Zahnspitzen (12) und den Zahnfüßen (18) im Bereich von 0,1 mm bis 3,0 mm liegt.

4. Klebeband (1) nach einem der Ansprüche 1 bis 3,
**dadurch gekennzeichnet, dass** durch den Trennprozess in der Nähe der Bandkante (10) liegende äußere Kettfäden (7) im Bereich der Zahnflanken (14, 16) abgeschnitten oder im Bereich der Zahnfüße (18) zumindest angerissen werden, wobei die Anzahl der derart geschwächten Kettfäden (7) an jeder Kante (10) im Bereich von 1 bis 15, bevorzugt im Bereich von 2 bis 12, besonders bevorzugt im Bereich von 6 bis 11, liegt.

5. Klebeband (1) nach einem der Ansprüche 1 bis 4,
**dadurch gekennzeichnet, dass** das Gewebe der zweiten textilen Schichtlage (5) das gleiche Gewebe ist, wie das Gewebe der ersten textilen Schichtlage (4).

6. Klebeband (1) nach einem der Ansprüche 1 bis 5,
**dadurch gekennzeichnet, dass** das Gewebe der ersten textilen Schichtlage (4) und/oder das Gewebe der zweiten textilen Schichtlage (5) jeweils ein Flächengewicht im Bereich von 110 g/m² bis 200 g/m², aufweist.

7. Klebeband (1) nach einem der Ansprüche 1 bis 6,
**dadurch gekennzeichnet, dass** das Gewebe der ersten textilen Schichtlage (4) und/oder das Gewebe der zweiten textilen Schichtlage (5) jeweils aus, insbesondere zu 100 Prozent aus Polyethylenterephthalat bestehenden, Polyesterfasern gebildet ist.

8. Klebeband (1) nach einem der Ansprüche 1 bis 7,
**dadurch gekennzeichnet, dass** die Klebverbindungsschicht (6) ein Flächengewicht im Bereich von 55 g/m² bis 150 g/m² aufweist.

9. Klebeband (1) nach einem der Ansprüche 1 bis 8,
**dadurch gekennzeichnet, dass** die Klebverbindungsschicht (6) aus einem Hotmeltklebstoff besteht, insbesondere aus einem Hotmeltklebstoff, der überwiegend aus einem Ethyl-Acrylat-Copolymer, wie einem Ethyl-Butyl-Acrylat oder einem Ethyl-Ethylen-Acrylat, oder überwiegend aus einem Ethylen-Vinyl-Acetat-Copolymer besteht, wobei das Copolymer vorzugsweise mit UV-vernetzbaren Acrylatharzen modifiziert ist und/oder einpolymerisierte UV-C-fotoreaktive Gruppen, insbesondere in Seitenketten, enthält.

10. Klebeband (1) nach einem der Ansprüche 1 bis 9,
**dadurch gekennzeichnet, dass** eine nach DIN EN 1939 bestimmte Laminathaftkraft zwischen der ersten textilen Schichtlage (4) und der zweiten textilen Schichtlage (5) des Trägers (2) größer ist als 10 N/cm und vorzugsweise im Bereich von 12 N/cm bis 15 N/cm liegt.

11. Klebeband (1) nach einem der Ansprüche 1 bis 10,
**dadurch gekennzeichnet, dass** die Klebebeschichtung (3) aus einem Acrylat- oder Acetatklebstoff besteht, insbesondere aus dem gleichen Hotmeltklebstoff wie die Klebverbindungsschicht (6).

12. Klebeband (1) nach einem der Ansprüche 1 bis 11,
**dadurch gekennzeichnet, dass** die Klebebeschichtung (3) ein Flächengewicht im Bereich von etwa 50 g/m² bis 300 g/m², vorzugsweise von 55 g/m² bis 150 g/m², aufweist.

13. Klebeband (1) nach einen der Ansprüche 1 bis 12,
**gekennzeichnet durch** eine Dicke (D) im Bereich von 0,55 mm bis 0,75 mm.

14. Klebeband (1) nach einem der Ansprüche 1 bis 13,
**gekennzeichnet durch** eine Klebkraft auf Stahl im Bereich von 4,5 N/cm bis 15,0 N/cm, vorzugsweise im Bereich von 6,0 N/cm bis 11,0 N/cm, bei einer Prüfung nach DIN EN 1939.

15. Klebeband (1) nach einem der Ansprüche 1 bis 14,
**gekennzeichnet durch** eine Klebkraft auf dem Bandrücken (4a) im Bereich von 4,0 N/cm bis 15,0 N/cm, vorzugsweise im Bereich von 5,5 N/cm bis 8,0 N/cm bei einer Prüfung nach DIN EN 1939.

16. Klebeband (1) nach einem der Ansprüche 1 bis 15,
**gekennzeichnet durch** eine Abrollkraft im Bereich von 2 N bis 15 N, vorzugsweise von 2 N bis 9 N, bei einer Prüfung nach DIN EN 1944.

17. Klebeband (1) nach einem der Ansprüche 1 bis 16,
**gekennzeichnet durch** eine Reißfestigkeit, die nicht kleiner ist als 50 N/cm, vorzugsweise nicht kleiner als 90 N/cm, bei einer Prüfung nach DIN EN 14410, und wobei vorzugsweise die Weiterreißbarkeit gemäß Elmendorftest nicht kleiner ist als 5.000 mN.

18. Klebeband (1) nach einem der Ansprüche 1 bis 17,
**gekennzeichnet durch** eine Reißdehnung, die im Bereich von 20 Prozent bis 50 Prozent bei einer Prüfung nach DIN EN 14410 liegt.

19. Klebeband (1) nach einem der Ansprüche 1 bis 18,
**gekennzeichnet durch** eine Abriebbeständigkeit nach LV 312 von mindestens der Klasse E, insbesondere durch eine Abriebbeständigkeit im Bereich von 5.500 bis 10.000 Hüben, bestimmt an einem 5-mm-Dorn.

20. Klebeband (1) nach einem der Ansprüche 1 bis 19,
**gekennzeichnet durch** eine Geräuschdämpfung nach LV 312 von mindestens der Klasse B, vorzugsweise eine Geräuschdämpfung im Bereich von 2 dB (A) bis 5 dB (A) nach LV 312.

21. Klebeband (1) nach einem der Ansprüche 1 bis 20,
**dadurch gekennzeichnet, dass** in dem Gewebe der ersten textilen Schichtlage (4) und/oder in dem Gewebe der zweiten textilen Schichtlage (5) jeweils die Kettfäden (7) und die Schussfäden (8) unterschiedlich beschaffen sind, wobei insbesondere die Feinheit der Kettfäden (7) zur Feinheit der Schussfäden (8) in einem Verhältnis von 1 : 8 - 11, vorzugsweise von 1 : 10, steht.

22. Klebeband (1) nach einem der Ansprüche 1 bis 21,
**dadurch gekennzeichnet, dass** in dem Gewebe der ersten textilen Schichtlage (4) und/oder in dem Gewebe der zweiten textilen Schichtlage (5) jeweils die Kettfäden (7) eine Feinheit im Bereich von 30 dtex bis 110 dtex, vorzugsweise von 50 dtex bis 76 dtex, aufweisen.

23. Klebeband (1) nach einem der Ansprüche 1 bis 22,
**dadurch gekennzeichnet, dass** in dem Gewebe der ersten textilen Schichtlage (4) und/oder in dem Gewebe der zweiten Schichtlage (5) jeweils die Schussfäden eine Feinheit im Bereich von 110 dtex bis 1.000 dtex aufweisen, vorzugsweise 110 dtex bis 550 dtex.

24. Klebeband (1) nach einem der Ansprüche 1 bis 23,
**dadurch gekennzeichnet, dass** in dem Gewebe der ersten textilen Schichtlage (4) und/oder in dem Gewebe der zweiten textilen Schichtlage (5) sich jeweils die Kettfäden (7) und/oder die Schussfäden (8) aus einer Anzahl im Bereich von 12 bis 240 Filamenten, bevorzugt aus 24 bis 36 Filamenten in den Kettfäden (7) und bevorzugt 36 bis 144 Filamenten in den Schussfäden (8), zusammensetzen.

25. Klebeband (1) nach einem der Ansprüche 1 bis 24,
**dadurch gekennzeichnet, dass** in dem Gewebe der ersten textilen Schichtlage (4) und/oder in dem Gewebe der zweiten textilen Schichtlage (5) Fadenkonstruktionen mit 45 ± 3 Kettfäden (7) und 23 ± 2 Schussfäden (8) vorliegen.

26. Klebeband (1) nach einem der Ansprüche 1 bis 25,
**dadurch gekennzeichnet, dass** in dem Gewebe der ersten textilen Schichtlage (4) und/oder in dem Gewebe der zweiten textilen Schichtlage (5) jeweils die Kettfäden (7) und/oder die Schussfäden (8) texturiert und/oder intermingelt sind, wobei insbesondere 50 bis 150 Intermingelungspunkte pro Meter vorliegen.

27. Klebeband (1) nach einem der Ansprüche 1 bis 26,
**dadurch gekennzeichnet, dass** in dem Gewebe der ersten textilen Schichtlage (4) und/oder in dem Gewebe der zweiten textilen Schichtlage (5) jeweils die Schussfäden (8) aus einer Kombination von Filamenten verschiedener Garnformen (FDY, DTY) gebildet sind.

28. Verfahren zur Herstellung eines Klebebandes (1) nach einem der Ansprüche 1 bis 27, umfassend die Verfahrensschritte
- Herstellung eines Trägers (2) durch Laminieren eines Gewebes einer ersten textilen Schichtlage (4) und eines Gewebes einer zweiten textilen Schichtlage (5) mittels einer Klebverbindungsschicht (6),
- Auftragen einer Klebebeschichtung (3) auf mindestens eine Seite des Laminates,
- Aufwickeln zu einer Mutterrolle (30) großer Breite (BM),
- Konfektionierung der Mutterrolle (30) zu Schmalrollen geringer Breite (B), wobei das mit der Klebebeschichtung (3) bedeckte Laminat von der Mutterrolle (30) über eine Trenneinrichtung (22) geführt wird, dort getrennt und das Klebeband (1) auf die Schmalrollen (32) gewickelt wird, wobei in der Trenneinrichtung (22) mindestens ein Zick-Zack-Messer (20) zur Herstellung von Bandkanten (10) des Klebebandes (1) eingesetzt wird, wobei das Zick-Zack-Messer (20) Zähne mit einer
Zahnhöhe (ZH) im Bereich von 0,1 mm bis 3,0 mm aufweist, wobei Mikrozacken mit einer Zahnhöhe (ZH) im Bereich von 0,1 mm bis <1,0 mm und Makrozacken mit einer Zahnhöhe (ZH) im Bereich von 1,0 mm bis 3,0 mm vorhanden sind, wodurch im Klebeband (1) eine Reißdehnung von mindestens 20 Prozent, eine Reißfestigkeit nach DIN EN 14410 im Bereich von weniger als 125 N/cm und eine Weiterreißbarkeit gemäß Elmendorftest von weniger als 10.000 mN eingestellt wird.

29. Verfahren nach Anspruch 28,
**dadurch gekennzeichnet, dass** der Klebstoff in der Klebverbindungsschicht (6) und/oder in der Klebebeschichtung (3) in einem drucklosen Beschichtungsverfahren aufgebracht wird, bei dem der Klebstoff als geschlossener Film jeweils auf die erste textile Schichtlage (4) oder die zweite textile Schichtlage (5) fällt.

30. Verfahren nach Anspruch 28 oder 29,
**dadurch gekennzeichnet, dass** zur Herstellung des Trägers (2) als Gewebe der ersten textilen Schichtlage (4) und/oder als Gewebe der zweiten textilen Schichtlage (5) jeweils ein Gewebe mit den Merkmalen des kennzeichnenden Teils eines oder mehrerer der Ansprüche 5 bis 7, 10, 19 und/oder 22 bis 27 eingesetzt wird.

31. Verfahren nach einem der Ansprüche 28 bis 30,
**dadurch gekennzeichnet, dass** die Klebebeschichtung (3) und/oder die Klebverbindungsschicht (6) eines oder mehrere der Merkmale des kennzeichnenden Teils der Ansprüche 8, 9, 11 und/oder 12 aufweist.

## Claims

1. Highly abrasion-resistant, hand-tearable technical adhesive tape (1), in particular an adhesive tape (1) that can be wound on itself to form a roll of adhesive tape, preferably a cable wrapping tape (1), having a strip-like double-layer carrier (2) bearing on one side a pressure-sensitive adhesive coating (3), wherein the carrier (2) comprises a first textile layer (4) consisting of a woven fabric and a second textile layer (5), the two being fully and firmly joined to one another by an adhesive bonding layer (6), wherein
the second textile layer (5) consists of a woven fabric, the woven fabric of the first textile layer (4) and the woven fabric of the second textile layer (5) each having a basis weight in the range of 50 g/m² to 300 g/m², wherein the adhesive bonding layer (6) has a basis weight in the range of 50 g/m² to 300 g/m² and wherein the adhesive tape (1) has a thickness (D) in the range of 0.55 mm to 1.0 mm and at least one tape edge (10) in the form of a pattern differing from a straight line, said pattern being structured by means of a cutting process, by a cutting device (22) which has micro-serrations with a tooth height (ZH) in the range of 0.1 mm to <1.0 mm and macro-serrations with a tooth height (ZH) in the range of 1.0 mm to 3.0 mm, such that a tear strength is less than 125 N/cm when tested according to DIN EN 14410, where an elongation at break is at least 20 percent and a force to continue tearing according to the Elmendorf test is less than 10,000 mN.

2. Adhesive tape (1) according to Claim 1,
**characterized in that** both tape edges (10) are configured as zig-zag cut edges which are described by a tooth pattern with tooth tips (12), tooth flanks (14, 16) and tooth feet (18).

3. Adhesive tape (1) according to Claim 1 or 2,
**characterized in that** a tooth height (ZH) between the tooth tips (12) and the tooth feet (18) lies in the range of 0.1 mm to 3.0 mm.

4. Adhesive tape (1) according to any one of Claims 1 to 3,
**characterized in that** as a result of the cutting process, outer warp threads (7) close to the tape edge (10) are cut off in the region of the tooth flanks (14, 16) or at least torn in the region of the teeth feet (18), where the number of warp threads (7) thus weakened at each edge (10) lies in the range of 1 to 15, preferably in the range of 2 to 12, more preferably in the range of 6 to 11.

5. Adhesive tape (1) according to any one of Claims 1 to 4,
**characterized in that** the woven fabric of the second textile layer (5) is the same woven fabric as the woven fabric of the first textile layer (4).

6. Adhesive tape (1) according to any one of Claims 1 to 5,
**characterized in that** the woven fabric of the first textile layer (4) and/or the woven fabric of the second textile layer (5) each has a basis weight in the range of 110 g/m² to 200 g/m².

7. Adhesive tape (1) according to any one of Claims 1 to 6,
**characterized in that** the woven fabric of the first textile layer (4) and/or the woven fabric of the second textile layer (5) each is formed of polyester fibres, especially fibres consisting 100 percent of polyethylene terephthalate.

8. Adhesive tape (1) according to any one of Claims 1 to 7,
**characterized in that** the adhesive bonding layer (6) has a basis weight in the range of 55 g/m² to 150 g/m².

9. Adhesive tape (1) according to any one of Claims 1 to 8,
**characterized in that** the adhesive bonding layer (6) consists of a hot-melt adhesive, in particular a hot-melt adhesive consisting primarily of an ethylacrylate copolymer, such as an ethyl-butyl-acrylate or an ethyl-ethylene-acrylate, or primarily of an ethylene-vinyl acetate copolymer, wherein the copolymer preferably is modified with UVcrosslinkable acrylate resins and/or comprises copolymerized UV-C-photoreactive groups, in particular in side chains.

10. Adhesive tape (1) according to any one of Claims 1 to 9,
**characterized in that** the laminate peel adhesion determined according to DIN EN 1939 between the first textile layer (4) and the second textile layer (5) of the carrier (2) is greater than 10 N/cm and preferably lies in the range of 12 N/cm to 15 N/cm.

11. Adhesive tape (1) according to any one of Claims 1 to 10,
**characterized in that** the adhesive coating (3) consists of an acrylate or acetate adhesive, in particular of the same hot-melt adhesive as the adhesive bonding layer (6).

12. Adhesive tape (1) according to any one of Claims 1 to 11,
**characterized in that** the adhesive coating (3) has a basis weight in the range of approximately 50 g/m² to 300 g/m², preferably of 55 g/m² to 150 g/m².

13. Adhesive tape (1) according to any one of Claims 1 to 12,
**characterized by** a thickness (D) in the range of 0.55 mm to 0.75 mm.

14. Adhesive tape (1) according to any one of Claims 1 to 13,
**characterized by** a peel adhesion on steel in the range of 4.5 N/cm to 15.0 N/cm, preferably in the range of 6.0 N/cm to 11.0 N/cm, when tested according to DIN EN 1939.

15. Adhesive tape (1) according to any one of Claims 1 to 14,
**characterized by** a peel adhesion on the back (4a) of the tape in the range of 4.0 N/cm to 15.0 N/cm, preferably in the range of 5.5 N/cm to 8.0 N/cm, when tested according to DIN EN 1939.

16. Adhesive tape (1) according to any one of Claims 1 to 15,
**characterized by** an unrolling force in the range of 2 N to 15 N, preferably from 2 N to 9 N, when tested according to DIN EN 1944.

17. Adhesive tape (1) according to any one of Claims 1 to 16,
**characterized by** a tear strength of not less than 50 N/cm, preferably not less than 90 N/cm, when tested according to DIN EN 14410, and where preferably the force to continue tearing according to the Elmendorf test is not less than 5,000 mN.

18. Adhesive tape (1) according to any one of Claims 1 to 17,
**characterized by** an elongation at break lying preferably in the range of 20 percent to 50 percent when tested according to DIN EN 14410.

19. Adhesive tape (1) according to any one of Claims 1 to 18,
**characterized by** an abrasion resistance according to LV 312 of at least Class E, in particular by an abrasion resistance in the range of 5,500 to 10,000 cycles as determined on a 5-mm mandrel.

20. Adhesive tape (1) according to any one of Claims 1 to 19,
**characterized by** a noise damping according to LV 312 of at least Class B, preferably a noise damping in the range of 2 dB (A) to 5 dB (A) according to LV 312.

21. Adhesive tape (1) according to any one of Claims 1 to 20,
**characterized in that** the warp threads (7) and the weft threads (8) in the woven fabric of the first textile layer (4) and/or in the woven fabric of the second textile layer (5) are each different in nature, where in particular the ratio of the fineness of the warp threads (7) to the fineness of the weft threads (8) is 1 : 8 - 11, preferably 1 : 10.

22. Adhesive tape (1) according to any one of Claims 1 to 21,
**characterized in that** the warp threads (7) in the woven fabric of the first textile layer (4) and/or in the woven fabric of the second textile layer (5) each have a fineness in the range of 30 dtex to 110 dtex, preferably of 50 dtex to 76 dtex.

23. Adhesive tape (1) according to any one of Claims 1 to 22,
**characterized in that** the weft threads in the woven fabric of the first textile layer (4) and/or in the woven fabric of the second textile layer (5) each have a fineness in the range of 110 dtex to 1,000 dtex, preferably 110 dtex to 550 dtex.

24. Adhesive tape (1) according to any one of Claims 1 to 23,
**characterized in that** the warp threads (7) and/or the weft threads (8) in the woven fabric of the first textile layer (4) and/or in the woven fabric of the second textile layer (5) each are composed of a number in the range of 12 to 240 filaments, preferably of 24 to 36 filaments in the warp threads (7) and preferably 36 to 144 filaments in the weft threads (8).

25. Adhesive tape (1) according to any one of Claims 1 to 24,
**characterized in that** in the woven fabric of the first textile layer (4) and/or in the woven fabric of the second textile layer (5), thread constructions are present with 45 ± 3 warp threads (7) and 23 ± 2 weft threads (8).

26. Adhesive tape (1) according to any one of Claims 1 to 25,
**characterized in that** the warp threads (7) and/or the weft threads (8) in the woven fabric of the first textile layer (4) and/or in the woven fabric of the second textile layer (5) each are textured and/or intermingled, where in particular 50 to 150 intermingling points per metre are present.

27. Adhesive tape (1) according to any one of Claims 1 to 26,
**characterized in that** the weft threads (8) in the woven fabric of the first textile layer (4) and/or in the woven fabric of the second textile layer (5) each are formed of a combination of filaments of different yarn types (FDY, DTY).

28. Method for manufacturing an adhesive tape (1) according to any one of Claims 1 to 27, comprising the method steps of
- manufacture of a carrier (2) by laminating a woven fabric of a first textile layer (4) and a woven fabric of a second textile layer (5) by means of an adhesive bonding layer (6),
- application of an adhesive coating (3) to at least one side of the laminate,
- winding to form a mother roll (30) of great width (BM) ,
- processing of the mother roll (30) into narrow rolls of small width (B), wherein the laminate covered with the adhesive coating (3) is guided from the mother roll (30) over a cutting device (22), is cut there and the adhesive tape (1) is wound onto the narrow rolls (32), where in the cutting device (22) at least one zig-zag knife (20) is used to produce tape edges (10) of the adhesive tape (1), wherein the zig-zag knife (20) has teeth with a tooth height (ZH) in the range of 0.1 mm to 3.0 mm, wherein micro-serrations with a tooth height (ZH) in the range of 0.1 mm to <1.0 mm and macro-serrations with a tooth height (ZH) in the range of 1.0 mm to 3.0 mm are present, whereby the adhesive tape (1) is given an elongation at break of at least 20 percent, a tear strength of less than 125 N/cm when tested according to DIN EN 14410, and a force to continue tearing according to the Elmendorf test of less than 10,000 mN.

29. Method according to Claim 28,
**characterized in that** the adhesive in the adhesive bonding layer (6) and/or in the adhesive coating (3) is applied using a pressureless coating method, where the adhesive falls as a coherent film onto the first textile layer (4) or the second textile layer (5) .

30. Method according to Claim 28 or 29,
**characterized in that** a woven fabric with the features of the characterizing part of one or more of Claims 5 to 7, 10, 19 and/or 22 to 27 is used as woven fabric for the first textile layer (4) and/or as woven fabric for the second textile layer (5) to manufacture the carrier (2).

31. Method according to any one of Claims 28 to 30,
**characterized in that** the adhesive coating (3) and/or the adhesive bonding layer (6) has one or more of the features of the characterizing part of Claims 8, 9, 11 and/or 12.

## Revendications

1. Bande adhésive technique hautement résistante aux frottements (1), notamment bande adhésive (1) enroulable sur elle-même en un rouleau de bande adhésive, de préférence bande d'enroulement de câble (1), comprenant un support double couche en forme de bande (2), qui est muni sur un côté d'un revêtement adhésif sensible à la pression (3), le support (2) comprenant une première couche textile constituée par un tissu (4) et une deuxième couche textile (5), qui sont reliées solidement l'une avec l'autre sur l'ensemble de la surface par une couche de liaison adhésive (6), la deuxième couche textile (5) étant constituée par un tissu, le tissu de la première couche textile (4) et le tissu de la deuxième couche textile (5) présentant chacun un poids superficiel dans la plage allant de 50 g/m² à 300 g/m², la couche de liaison adhésive (6) présentant un poids superficiel dans la plage allant de 50 g/m² à 300 g/m², et la bande adhésive (1) présentant une épaisseur (D) dans la plage allant de 0,55 mm à 1,0 mm, et au moins un bord de bande (10) étant configuré sous la forme d'un motif différent d'une ligne droite, qui est structuré par un procédé de séparation par un appareil de séparation (22), qui présente des micro-pics ayant une hauteur de dent (ZH) dans la plage allant de 0,1 mm à < 1,0 mm et des macropics ayant une hauteur de dent (ZH) dans la plage allant de 1,0 mm à 3,0 mm, de telle sorte qu'une résistance au déchirement lors d'un essai selon DIN EN 14410 est inférieure à 125 N/cm, un allongement au déchirement étant d'au moins 20 pour cent et une résistance à la propagation d'un déchirement selon le test Elmendorf étant inférieure à 10 000 mN.

2. Bande adhésive (1) selon la revendication 1, **caractérisée en ce que** les deux bords de bande (10) sont configurés sous la forme de bords découpés en zigzag, qui sont décrits par un motif de dents comprenant des pointes de dents (12), des flancs de dents (14, 16) et des fonds de dents (18).

3. Bande adhésive (1) selon la revendication 1 ou 2, **caractérisée en ce qu'**une hauteur de dent (ZH) entre les pointes de dents (12) et les fonds de dents (18) se situe dans la plage allant de 0,1 mm à 3,0 mm.

4. Bande adhésive (1) selon l'une quelconque des revendications 1 à 3, **caractérisée en ce que** les fils de chaîne extérieurs (7) situés à proximité du bord de bande (10) sont découpés dans la zone des flancs de dents (14, 16) ou au moins entamés dans la zone des fonds de dents (18) par le procédé de séparation, le nombre de fils de chaîne (7) ainsi affaiblis sur chaque bord (10) se situant dans la plage allant de 1 à 15, de préférence dans la plage allant de 2 à 12, de manière particulièrement préférée dans la plage allant de 6 à 11.

5. Bande adhésive (1) selon l'une quelconque des revendications 1 à 4, **caractérisée en ce que** le tissu de la deuxième couche textile (5) est le même tissu que le tissu de la première couche textile (4).

6. Bande adhésive (1) selon l'une quelconque des revendications 1 à 5, **caractérisée en ce que** le tissu de la première couche textile (4) et/ou le tissu de la deuxième couche textile (5) présentent chacun un poids superficiel dans la plage allant de 110 g/m² à 200 g/m².

7. Bande adhésive (1) selon l'une quelconque des revendications 1 à 6, **caractérisée en ce que** le tissu de la première couche textile (4) et/ou le tissu de la deuxième couche textile (5) sont chacun formés par des fibres de polyester, notamment constituées à 100 pour cent par du polytéréphtalate d'éthylène.

8. Bande adhésive (1) selon l'une quelconque des revendications 1 à 7, **caractérisée en ce que** la couche de liaison adhésive (6) présente un poids superficiel dans la plage allant de 55 g/m² à 150 g/m².

9. Bande adhésive (1) selon l'une quelconque des revendications 1 à 8, **caractérisée en ce que** la couche de liaison adhésive (6) est constituée par un adhésif thermofusible, notamment un adhésif thermofusible qui est principalement constitué par un copolymère d'acrylate d'éthyle, tel qu'un acrylate d'éthyl-butyle ou un acrylate d'éthyl-éthylène, ou principalement constitué par un copolymère d'éthylène-acétate de vinyle, le copolymère étant de préférence modifié avec des résines acrylates réticulables par UV et/ou contenant des groupes photoréactifs par UV-C copolymérisés, notamment dans des chaînes latérales.

10. Bande adhésive (1) selon l'une quelconque des revendications 1 à 9, **caractérisée en ce qu'une** force d'adhésion du stratifié déterminée selon DIN EN 1939 entre la première couche textile (4) et la deuxième couche textile (5) du support (2) est supérieure à 10 N/cm, et se situe de préférence dans la plage allant de 12 N/cm à 15 N/cm.

11. Bande adhésive (1) selon l'une quelconque des revendications 1 à 10, **caractérisée en ce que** le revêtement adhésif (3) est constitué par un adhésif acrylate ou acétate, notamment par le même adhésif thermofusible que la couche de liaison adhésive (6).

12. Bande adhésive (1) selon l'une quelconque des revendications 1 à 11, **caractérisée en ce que** le revêtement adhésif (3) présente un poids superficiel dans la plage allant d'environ 50 g/m² à 300 g/m², de préférence de 55 g/m² à 150 g/m².

13. Bande adhésive (1) selon l'une quelconque des revendications 1 à 12, **caractérisée par** une épaisseur (D) dans la plage allant de 0,55 mm à 0,75 mm.

14. Bande adhésive (1) selon l'une quelconque des revendications 1 à 13, **caractérisée par** une force d'adhésion sur l'acier dans la plage allant de 4,5 N/cm à 15,0 N/cm, de préférence dans la plage allant de 6,0 N/cm à 11,0 N/cm, lors d'un essai selon DIN EN 1939.

15. Bande adhésive (1) selon l'une quelconque des revendications 1 à 14, **caractérisée par** une force d'adhésion sur le dos de la bande (4a) dans la plage allant de 4,0 N/cm à 15,0 N/cm, de préférence dans la plage allant de 5,5 N/cm à 8,0 N/cm, lors d'un essai selon DIN EN 1939.

16. Bande adhésive (1) selon l'une quelconque des revendications 1 à 15, **caractérisée par** une force de déroulement dans la plage allant de 2 N à 15 N, de préférence de 2 N à 9 N, lors d'un essai selon DIN EN 1944.

17. Bande adhésive (1) selon l'une quelconque des revendications 1 à 16, **caractérisée par** une résistance au déchirement qui n'est pas inférieure à 50 N/cm, de préférence pas inférieure à 90 N/cm, lors d'un essai selon DIN EN 14410, l'aptitude à la propagation d'un déchirement selon le test Elmendorf n'étant de préférence pas inférieure à 5 000 mN.

18. Bande adhésive (1) selon l'une quelconque des revendications 1 à 17, **caractérisée par** un allongement au déchirement qui se situe dans la plage allant de 20 pour cent à 50 pour cent, lors d'un essai selon DIN EN 14410.

19. Bande adhésive (1) selon l'une quelconque des revendications 1 à 18, **caractérisée par** une résistance aux frottements selon LV 312 d'au moins la classe E, notamment par une résistance aux frottements dans la plage allant de 5 500 à 10 000 courses, déterminée sur une broche de 5 mm.

20. Bande adhésive (1) selon l'une quelconque des revendications 1 à 19, **caractérisée par** un amortissement du bruit selon LV 312 d'au moins la classe B, de préférence un amortissement du bruit dans la plage allant de 2 dB (A) à 5 dB (A) selon LV 312.

21. Bande adhésive (1) selon l'une quelconque des revendications 1 à 20, **caractérisée en ce que,** dans le tissu de la première couche textile (4) et/ou dans le tissu de la deuxième couche textile (5), les fils de chaîne (7) et les fils de trame (8) sont à chaque fois configurés différemment, le titre des fils de chaîne (7) et le titre des fils de trame (8) présentant notamment un rapport de 1:8 à 11, de préférence de 1:10.

22. Bande adhésive (1) selon l'une quelconque des revendications 1 à 21, **caractérisée en ce que,** dans le tissu de la première couche textile (4) et/ou dans le tissu de la deuxième couche textile (5), les fils de chaîne (7) présentent à chaque fois un titre dans la plage allant de 30 dtex à 110 dtex, de préférence de 50 dtex à 76 dtex.

23. Bande adhésive (1) selon l'une quelconque des revendications 1 à 22, **caractérisée en ce que,** dans le tissu de la première couche textile (4) et/ou dans le tissu de la deuxième couche textile (5), les fils de trame présentent à chaque fois un titre dans la plage allant de 110 dtex à 1 000 dtex, de préférence de 110 dtex à 550 dtex.

24. Bande adhésive (1) selon l'une quelconque des revendications 1 à 23, **caractérisée en ce que,** dans le tissu de la première couche textile (4) et/ou dans le tissu de la deuxième couche textile (5), les fils de chaîne (7) et/ou les fils de trame (8) sont composés par un nombre dans la plage allant de 12 à 240 filaments, de préférence de 24 à 36 filaments dans les fils de chaîne (7) et de préférence de 36 à 144 filaments dans les fils de trame (8).

25. Bande adhésive (1) selon l'une quelconque des revendications 1 à 24, **caractérisée en ce que,** dans le tissu de la première couche textile (4) et/ou dans le tissu de la deuxième couche textile (5), des constructions de fils contenant 45 ± 3 fils de chaîne (7) et 23 ± 2 fils de trame (8) sont présentes.

26. Bande adhésive (1) selon l'une quelconque des revendications 1 à 25, **caractérisée en ce que,** dans le tissu de la première couche textile (4) et/ou dans le tissu de la deuxième couche textile (5), les fils de chaîne (7) et/ou les fils de trame (8) sont à chaque fois texturés et/ou entremêlés, 50 à 150 points d'entremêlement par mètre étant notamment présents.

27. Bande adhésive (1) selon l'une quelconque des revendications 1 à 26, **caractérisée en ce que,** dans le tissu de la première couche textile (4) et/ou dans le tissu de la deuxième couche textile (5), les fils de trame (8) sont à chaque fois formés par une combinaison de filaments de différentes formes de fils (FDY, DTY).

28. Procédé de fabrication d'une bande adhésive (1) selon l'une quelconque des revendications 1 à 27, comprenant les étapes de procédé suivantes :
- la fabrication d'un support (2) par stratification d'un tissu d'une première couche textile (4) et d'un tissu d'une deuxième couche textile (5) au moyen d'une couche de liaison adhésive (6),
- l'application d'un revêtement adhésif (3) sur au moins un côté du stratifié,
- l'enroulement en un rouleau mère (30) de grande largeur (BM),
- le conditionnement du rouleau mère (30) en petits rouleaux de largeur plus petite (B), le stratifié du rouleau mère (30) recouvert avec le revêtement adhésif (3) étant acheminé sur un dispositif de séparation (22), y étant séparé, et la bande adhésive (1) étant enroulée en les petits rouleaux (32), au moins une lame en zigzag (20) pour la fabrication de bords de bande (10) de la bande adhésive (1) étant utilisée dans le dispositif de séparation (22), la lame en zigzag (20) présentant des dents ayant une hauteur de dent (ZH) dans la plage allant de 0,1 mm à 3,0 mm, des micro-pics ayant une hauteur de dent (ZH) dans la plage allant de 0,1 mm à < 1,0 mm et des macropics ayant une hauteur de dent (ZH) dans la plage allant de 1,0 mm à 3,0 mm étant présents, un allongement au déchirement d'au moins 20 pour cent, une résistance au déchirement selon DIN EN 14410 dans la plage de moins de 125 N/cm et une aptitude à la propagation d'un déchirement selon le test Elmendorf inférieure à 10 000 mN étant ainsi ajustés dans la bande adhésive (1).

29. Procédé selon la revendication 28, **caractérisé en ce que** l'adhésif dans la couche de liaison adhésive (6) et/ou dans le revêtement adhésif (3) est appliqué par un procédé de revêtement sans pression, selon lequel l'adhésif tombe sous la forme d'un film fermé respectivement sur la première couche textile (4) ou sur la deuxième couche textile (5).

30. Procédé selon la revendication 28 ou 29, **caractérisé en ce que,** pour la fabrication du support (2), un tissu ayant les caractéristiques de la partie caractérisante d'une ou de plusieurs des revendications 5 à 7, 10, 19 et/ou 22 à 27 est utilisé en tant que tissu de la première couche textile (4) et/ou en tant que tissu de la deuxième couche textile (5).

31. Procédé selon l'une quelconque des revendications 28 à 30, **caractérisé en ce que** le revêtement adhésif (3) et/ou la couche de liaison adhésive (6) présentent une ou plusieurs des caractéristiques de la partie caractérisante des revendications 8, 9, 11 et/ou 12.
